(19) Europäisches Patentamt
European Patent Office
Office européen des brevets

(11) EP 4 800 758 A1

(12) EUROPEAN PATENT APPLICATION
published in accordance with Art. 153(4) EPC

(43) Date of publication:
**02.09.2026 Bulletin 2026/36**

(21) Application number: **24883908.6**

(22) Date of filing: **31.05.2024**

(51) International Patent Classification (IPC):
***H01M 4/36*** *(2006.01)* ***H01M 4/485*** *(2010.01)*
***H01M 4/505*** *(2010.01)* ***H01M 4/525*** *(2010.01)*

(52) Cooperative Patent Classification (CPC):
**C01G 53/44; C01G 53/51; H01M 4/131; H01M 4/36; H01M 4/485; H01M 4/505; H01M 4/525; H01M 10/054;** Y02E 60/10

(86) International application number:
**PCT/CN2024/096843**

(87) International publication number:
**WO 2025/091897 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.11.2023 CN 202311450733**

(71) Applicant: **Contemporary Amperex Technology Co., Limited**
**Ningde, Fujian 352100 (CN)**

(72) Inventors:
- **WU, Kai**
  **Ningde, Fujian 352100 (CN)**
- **TANG, Zheng**
  **Ningde, Fujian 352100 (CN)**
- **YE, Yonghuang**
  **Ningde, Fujian 352100 (CN)**
- **OUYANG, Shaocong**
  **Ningde, Fujian 352100 (CN)**

(74) Representative: **Kraus & Lederer PartGmbB**
**Thomas-Wimmer-Ring 15**
**80539 München (DE)**

# (54) POSITIVE ELECTRODE MATERIAL AND PREPARATION METHOD THEREFOR, POSITIVE ELECTRODE, SODIUM BATTERY AND ELECTRIC DEVICE

(57) A positive electrode material and a preparation method therefor, a positive electrode, a sodium battery, and an electric device are disclosed. The positive electrode material comprises a layered oxide represented by chemical formula $Na_aNi_bFe_cMn_dM_eO_f$, wherein $0.8 \leq a \leq 1$, $0 \leq b \leq 0.2$, $0.25 \leq c \leq 0.5$, $0.26 \leq d \leq 0.6$, $0 \leq e \leq 0.1$, $1.8 \leq f \leq 2$, and M is a doped metal element. The preparation method for the positive electrode material comprises the step of sintering a $Na_aNi_bFe_cMn_dM_eO_f$ precursor. The positive electrode contains the layered oxide represented by the chemical formula, and the sodium battery contains the positive electrode. The electric device comprises the sodium battery. The layered oxide contained in the positive electrode material has high structural stability, gram capacity and energy density and good cycle performance. The sodium battery has high energy density and good cycle performance.

10 µm
EHT = 10.00 kV
WD = 4.3 mm
Signal A = InLens
Mag = 1.00 K X
Date :18 Aug 2022
Time :4:52:43
ZEISS

FIG. 1

EP 4 800 758 A1

## Description

This application claims priority to Chinese patent application No. 202311450733.0, filed with the China National Intellectual Property Administration on November 2, 2023 and entitled "POSITIVE ELECTRODE MATERIAL AND PREPARATION METHOD THEREFOR, POSITIVE ELECTRODE, SODIUM BATTERY, AND ELECTRIC APPARATUS", which is incorporated herein by reference in its entirety.

## TECHNICAL FIELD

This application belongs to the field of sodium battery technologies, and specifically relates to a positive electrode material and a preparation method therefor, a positive electrode, a sodium battery, and an electric apparatus.

## BACKGROUND

Sodium-ion batteries have advantages such as abundant raw material reserves, low costs, relatively stable chemical properties, and good safety, and are expected to replace lithium-ion batteries in entering the market. With the continuous development of new energy vehicles and the continuous increase in the proportion of clean energy, higher requirements are imposed on the energy density and cycle stability of sodium-ion batteries.

In positive electrode materials for sodium-ion batteries, layered oxides have become one of the research hotspots for positive electrode materials of the sodium-ion battery due to their high gram capacity. To further improve the gram capacity of layered oxides, metal element doping is generally used, but it has been found that the presence of some doped metal elements can lead to a decrease in the crystal structure stability of layered oxides, thereby leading to a decrease in the gram capacity and cycling performance of layered oxides.

## TECHNICAL PROBLEM

In view of the above problems, this application provides a positive electrode material and a preparation method therefor, a positive electrode containing the positive electrode material, and a sodium battery containing the positive electrode, to resolve the technical problem that existing layered oxides have undesirable structural stability, leading to a decrease in their own specific gram capacity and cycling performance.

## TECHNICAL SOLUTION

According to a first aspect, embodiments of this application provide a positive electrode material. The positive electrode material in embodiments of this application includes a layered oxide represented by the following chemical formula:

$$Na_aNi_bFe_cMn_dM_eO_{f;}$$

where $0.8 \leq a \leq 1$, $0 \leq b \leq 0.2$, $0.25 \leq c \leq 0.5$, $0.26 \leq d \leq 0.6$, $0 \leq e \leq 0.1$, $1.8 \leq f \leq 2$, $b+c+d+e \leq 1$, and M is an active and/or inert doping metal element.

According to the positive electrode material in embodiments of this application, the transition metal layer ($TMO_6$) structure of the layered oxide represented by the chemical formula is optimized through the Fe element or further through the doping metal element represented by M, thereby effectively improving the gram capacity and energy density of the layered oxide. Controlling the contents of the Fe element and the Mn element to be within the stoichiometric ratio ranges represented by d and c, or further controlling the doping metal element represented by M to be within the stoichiometric ratio range, can also effectively alleviate migration of the Fe element occurring during the sodium intercalation and deintercalation from the layered oxide, improving the structural stability of the layered oxide to improve the cycling performance of the layered oxide.

For the positive electrode material in embodiments of this application, arrangement of metal elements between the transition metal layers contained in the layered oxide represented by the chemical formula and the spacing between the transition metal layer and the sodium layer are effectively adjusted by controlling the content ranges including the Fe element and the Mn element or further controlling that of the element represented by M, thereby improving the structural stability of the layered oxide during the sodium intercalation and deintercalation and the full utilization of gram capacity, and improving the gram capacity and cycling performance of the layered oxide.

In some embodiments, at least one of the a, the b, the c, the d, and the e is within the following value range:

$$0.85 \leq a \leq 1,\ 0 \leq b \leq 0.18,\ 0.3 \leq c \leq 0.5,\ 0.3 \leq d \leq 0.6, \text{ and } 0.02 \leq e \leq 0.1.$$

By further controlling the stoichiometric ratio of at least one of the Ni, Mn, and Fe elements, or at least one of the Ni, Mn, Fe, and M element to be within such range, the doping of the transition metal layer in the layered oxide represented by the chemical formula with the Fe element or further with the doping metal element represented by M can be further optimized, to further adjust the arrangement of metal elements in the transition metal layer, thereby further reducing migration of the Fe element, improving the structural stability of the layered oxide during the sodium intercalation and deintercalation, and improving the gram capacity and cycling performance of the layered oxide.

In some embodiments, a ratio of the total stoichiometric amount of the Ni element, the Mn element, the Fe element, and the doping metal element to the stoichiometric amount of the Na element is 1:(0.85-0.95).

In some embodiments, a ratio of the total stoichiometric amount of the Ni element, the Mn element, the Fe element, and the doping metal element to the stoichiometric amount of the Na element is 1:(0.86-0.94).

Controlling the stoichiometric ratio of the Na element to other metal elements contained in the layered oxide represented by the chemical formula to be within this range can improve the gram capacity and cycling performance of the layered oxide.

In some embodiments, a ratio of the total stoichiometric amount of the Mn element and the doping metal element to the stoichiometric amount of the Fe element is 0.9-1.5:1.

In some embodiments, a ratio of the total stoichiometric amount of the Mn element and the doping metal element to the stoichiometric amount of the Fe element is 1-1.2:1.

In this case, when e=0 in the chemical formula (I), the content of M is equal to 0, indicating the stoichiometric ratio of the Mn element to the Fe element; when e>0 in the chemical formula (I), the content of M is greater than 0, indicating the total stoichiometric amount of the Mn element and the doping metal element represented by M to the stoichiometric amount of the Fe element. Controlling the stoichiometric ratio of the Fe element to the Mn element contained in the layered oxide represented by the chemical formula, or further to the doping metal element represented by M, to be within this range can further adjust the arrangement of metal elements in the transition metal layer and the spacing between the transition metal layer and the sodium layer, so as to further alleviate migration of the Fe element occurring during the sodium intercalation and deintercalation from the layered oxide, thereby further improving the structural stability of the layered oxide and improving the utilization of gram capacity.

In some embodiments, the doping metal element includes at least one of Zn, V, Cr, Al, Sc, Sn, Sb, Zr, Nb, Ti, Mg, Cu, Ru, and Ir. Controlling the doping metal element represented by M to be within the ranges of these elements can effectively adjust the arrangement of metal elements in the transition metal layer and the spacing between the transition metal layer and the sodium layer, assisting the Mn element in further reducing migration of the Fe element, to further improve the structural stability of the layered oxide represented by the chemical formula during the sodium intercalation and deintercalation. When the doping metal element represented by M is an active doping metal element, the gram capacity of the layered oxide can be further improved.

In some embodiments, the layered oxide includes at least one of $Na_{0.87}Ni_{0.2}Fe_{0.3}Mn_{0.45}O_2$, $Na_{0.87}Ni_{0.2}Fe_{0.35}Mn_{0.45}O_2$, $Na_{0.85}Ni_{0.1}Fe_{0.387}Mn_{0.43}O_2$, $Na_{0.85}Ni_{0.05}Fe_{0.45}Mn_{0.45}O_2$, $Na_{0.87}Ni_{0.05}Fe_{0.5}Mn_{0.45}O_2$, $Na_{0.85}Ni_{0.1}Fe_{0.38}Mn_{0.437}Zn_{0.082}O_2$, $Na_{0.85}Ni_{0.1}Fe_{0.38}Mn_{0.437}V_{0.082}O_2$, $Na_{0.85}Ni_{0.1}Fe_{0.38}Mn_{0.437}Cr_{0.082}O_2$, $Na_{0.85}Ni_{0.1}Fe_{0.38}Mn_{0.437}Al_{0.082}O_2$, $Na_{0.85}Ni_{0.1}Fe_{0.38}Mn_{0.437}Sc_{0.082}O_2$, $Na_{0.85}Ni_{0.1}Fe_{0.38}Mn_{0.437}Sn_{0.082}O_2$, $Na_{0.85}Ni_{0.1}Fe_{0.38}Mn_{0.437}Sb_{0.082}O_2$, $Na_{0.85}Ni_{0.1}Fe_{0.38}Mn_{0.437}Zr_{0.082}O_2$, $Na_{0.85}Ni_{0.1}Fe_{0.38}Mn_{0.437}Nb_{0.082}O_2$, $Na_{0.85}Ni_{0.1}Fe_{0.38}Mn_{0.437}Ti_{0.082}O_2$, $Na_{0.85}Ni_{0.2}Fe_{0.28}Mn_{0.437}Mg_{0.082}O_2$, $Na_{0.85}Ni_{0.1}Fe_{0.38}Mn_{0.437}Ru_{0.082}O_2$, $Na_{0.85}Ni_{0.1}Fe_{0.38}Mn_{0.437}Ir_{0.082}O_2$, $Na_{0.85}Ni_{0.1}Fe_{0.38}Mn_{0.437}Al_{0.04}Zn_{0.04}O_2$, $Na_{0.85}Ni_{0.1}Fe_{0.38}Mn_{0.267}Zn_{0.082}O_2$, $Na_{0.85}Fe_{0.4}Mn_{0.6}O_2$, Na0.92Ni0.15Fe0.34Mn0.45O2, $Na_{0.92}Ni_{0.15}Fe_{0.41}Mn_{0.44}O_2$, $Na_{0.92}Ni_{0.05}Fe_{0.5}Mn_{0.45}O_2$, $Na_{0.92}Fe_{0.38}Mn_{0.6}O_2$, $Na_{0.92}Ni_{0.1}Fe_{0.38}Mn_{0.437}Zn_{0.082}O_2$, $Na_{0.92}Ni_{0.1}Fe_{0.38}Mn_{0.367}Zn_{0.082}O_2$, and $Na_{0.92}Ni_{0.1}Fe_{0.494}Mn_{0.395}O_2$.

In the layered oxides represented by the molecular formulas, a specific arrangement is formed between metal elements in the transition metal layer contained in the layered oxide. When controlling the Mn element or the doping metal element represented by M, the stabilizing effect on the Fe element can be further exerted, reducing migration of the Fe element, further improving the stability of the iron element in the transition metal layer, and improving the gram capacity and cycling performance of the layered oxide. In addition, this can further reduce the content of the Ni element in the layered oxide represented by the chemical formula (I). On the basis of improving the gram capacity and cycling performance of the layered oxide represented by the chemical formula (I), the economic costs of the layered oxide can be reduced. Moreover, electrochemical performance and processing performance of the layered oxide, such as sheet resistance, can be further improved.

In some embodiments, the layered oxide includes at least one feature among the following (1) to (3):

(1) a crystal structure includes an O3-phase layered metal oxide, and the O3-phase layered metal oxide accounts for

more than 95% of the total weight of the layered oxide;
(2) a $D_v50$ particle size is 3-9 μm; and
(3) single crystals are included, where the single crystals have a blocky morphology.

In some embodiments, the $D_v50$ particle size of the layered oxide is 4.2-8.5 μm.
In some embodiments, the layered oxide includes at least one feature among the following (1) to (3):

(1) a powder compacted density under a pressure of 2 tons is higher than 2.7 $g/cm^3$;
(2) a powder compacted density under a pressure of 3 tons is higher than 3.0 $g/cm^3$; and
(3) a specific surface area is 0.4-1.5 $m^2/g$.

In some embodiments, the layered oxide includes at least one feature among the following (1) to (3):

(1) a powder compacted density under a pressure of 2 tons is 2.7-3.0 $g/cm^3$;
(2) a powder compacted density under a pressure of 3 tons is 3.0-3.3 $g/cm^3$; and
(3) a specific surface area is 0.5-0.95 $m^2/g$.

The layered oxide represented by the chemical formula (I) in the above embodiments is mainly an O3-phase layered metal oxide and includes a single crystal structure, having a high compacted density and a specific surface area within an appropriate range.
In some embodiments, the layered oxide includes at least one feature of the following (1) to (3) at 1.5-4.2 V and 0.1 C:

(1) a charging gram capacity is 130-150 mAh/g;
(2) a discharging gram capacity is 129-145 mAh/g; and
(3) a first-cycle efficiency is higher than 92%.

In some embodiments, the layered oxide includes at least one feature of the following (1) to (3) at 1.5-4.2 V and 0.1 C:

(1) a charging gram capacity is 132-150 mAh/g;
(2) a discharging gram capacity is 130-144 mAh/g; and
(3) a first-cycle efficiency is 92% to 98%.

The structural stability of the layered oxide represented by the above chemical formula (I) is significantly improved, having good structural stability during the sodium intercalation and deintercalation, and having high gram capacity and energy density.
According to a second aspect, embodiments of this application provide a preparation method for a positive electrode material. The preparation method for the positive electrode material in embodiments of this application includes the following steps:

providing a precursor of $Na_aNi_bFe_cMn_dM_eO_f$; and
performing sintering treatment on the precursor to obtain a layered oxide having a chemical formula of $Na_aNi_bFe_cMn_dM_eO_f$;
where $0.8 \le a \le 1$, $0 \le b \le 0.2$, $0.25 \le c \le 0.5$, $0.26 \le d \le 0.6$, $0 \le e \le 0.1$; $1.8 \le f \le 2$, $b+c+d+e \le 1$; and M is an active and/or inert doping metal element.

According to the preparation method for the positive electrode material in embodiments of this application, the layered oxide represented by the chemical formula $Na_aNi_bFe_cMn_dM_eO_f$ described above is prepared by sintering the precursor of $Na_aNi_bFe_cMn_dM_eO_f$. Therefore, with the stoichiometric ratio of the Fe element and Mn in the layered oxide prepared by using the preparation method for the positive electrode material in embodiments of this application, the migration of iron element can be effectively reduced, improving the structural stability of the layered oxide during the sodium intercalation and deintercalation, and making the prepared layered oxide have high gram capacity and energy density, and good cycling performance. In addition, it also has performance such as a high sodium ion diffusion rate, thereby improving the DCR growth of the battery cell. Moreover, by effectively controlling the conditions of the sintering treatment of the precursor of $Na_aNi_bFe_cMn_dM_eO_f$, the stability of the structure and electrochemical performance of the layered oxide having the chemical formula $Na_aNi_bFe_cMn_dM_eO_f$ can be improved.
In some embodiments, the doping metal element includes at least one of Zn, V, Cr, Al, Sc, Sn, Sb, Zr, Nb, Ti, Mg,

Cu, Ru, and Ir.

These doping metal elements can be further doped together with elements such as Fe for the transition metal layer contained in the layered oxide represented by the chemical formula, so as to adjust the arrangement of metal elements in the transition metal layer, and based on the type of the doping metal element, further improving the structural stability and/or gram capacity of the layered oxide represented by the chemical formula during the sodium intercalation and deintercalation.

In some embodiments, at least one of the a, the b, the c, the d, and the e is within the following value range:

$$0.85 \leq a \leq 1,\ 0 \leq b \leq 0.18,\ 0.3 \leq c \leq 0.5,\ 0.3 \leq d \leq 0.6, \text{ and } 0.02 \leq e \leq 0.1.$$

By further adjusting the proportions of these metal elements in the precursor of $Na_aNi_bFe_cMn_dM_eO_2$ to be within this range, the arrangement of metal elements in the prepared layered oxide can be further adjusted, thereby further improving the structural stability of the prepared layered oxide during the sodium intercalation and deintercalation, and improving the utilization of gram capacity of the layered oxide and the cycle stability of reversible capacity.

In some embodiments, the sintering treatment includes at least one condition among the following (1) to (3):

(1) a temperature is 700-980°C;
(2) a time is 3-20 h; and
(3) heating is performed to the temperature of the sintering treatment at a heating rate of 2-15°C/min.

In some embodiments, the sintering treatment includes at least one condition among the following (1) to (2):

(1) a temperature is 750-950°C; and
(2) a time is 5-12 h.

By controlling the conditions of the sintering treatment to be within the above ranges, the structural stability of the layered oxide of $Na_aNi_bFe_cMn_dM_eO_f$ during the sodium intercalation and deintercalation can be further improved, further improving the high gram capacity, energy density, and cycling performance of the layered oxide. In addition, the content of O3-phase layered metal oxide and the content of single crystals in the layered oxide of $Na_aNi_bFe_cMn_dM_eO_f$ can be increased and the single crystal size and particle size of the layered oxide can be controlled, thereby improving performance such as compacted density of the layered oxide.

In some embodiments, the precursor of $Na_aNi_bFe_cMn_dM_eO_f$ is prepared by using a method including the following steps:

performing solid-phase mixing treatment on a sodium source, a nickel source, a manganese source, an iron source, and an M source based on the stoichiometric ratio of the elements contained in $Na_aNi_bFe_cMn_dM_eO_f$, to obtain the precursor.

By preparing the precursor of $Na_aNi_bFe_cMn_dM_eO_f$ using this solid-phase method, the stoichiometric ratios of various elements can be effectively controlled, and the preparation effect of the precursor can be improved.

In some embodiments, the precursor of $Na_aNi_bFe_cMn_dM_eO_f$ is prepared by using a method including the following steps:

preparing, based on the stoichiometric ratio of the elements in $Na_aNi_bFe_cMn_dM_eO_f$, a mixed solution from a soluble nickel source, a soluble manganese source, a soluble iron source, and a soluble doping element source represented by M, and adding at least one of a precipitant and a complexing agent for co-precipitation treatment to obtain a precipitate mixture; and

performing mixing treatment on the precipitate mixture with a sodium source to obtain the precursor.

By preparing the precursor of $Na_aNi_bFe_cMn_dM_eO_f$ using this co-precipitation method, the accuracy of the stoichiometric ratios of various elements can be improved.

According to a third aspect, embodiments of this application provide a positive electrode. The positive electrode in embodiments of this application includes a current collector and a positive electrode active material layer disposed on the surface of the current collector, where the positive electrode active material layer includes the positive electrode material in embodiments of this application or a positive electrode material prepared by using the preparation method for the positive electrode material in embodiments of this application.

The positive electrode active material layer of the positive electrode in embodiments of this application contains the positive electrode material in embodiments of this application described above. The positive electrode has a relatively high gram capacity, a relatively high coating areal density, and a relatively high electrode plate compacted density, which is beneficial for improving the energy density of the battery.

In some embodiments, the content of the positive electrode active material layer on one side of the current collector, that is, the coating areal density (CW for short), is 250-330 mg/1540.25 $mm^2$.

In some embodiments, the content of the positive electrode active material layer on one side of the current collector, that is, the coating areal density (CW for short), is 280-320 mg/1540.25 $mm^2$.

The positive electrode active material layer within this content range is beneficial for improving the energy density of the battery.

In some embodiments, an electrode plate compacted density of the positive electrode is 2.6-3.2 g/$cm^3$.

In some embodiments, an electrode plate compacted density of the positive electrode is 2.8-3.0 g/$cm^3$.

The compacted density within this range is beneficial for improving the energy density of the battery, and has good stability at the interface in contact with the electrolyte.

In some embodiments, a porosity of the positive electrode active material layer is 35% to 65%.

In some embodiments, a porosity of the positive electrode active material layer is 40% to 58%.

The porosity within this range can make the positive electrode active material layer have the above compacted density, which is beneficial for improving the energy density of the battery, and also improving the wettability of the electrolyte.

In some embodiments, the positive electrode is an electrode plate, and a sheet resistance of the electrode plate is 0.5-5 m$\Omega$.

In some embodiments, the positive electrode is an electrode plate, and a sheet resistance of the electrode plate is 0.5-3 m$\Omega$.

The sheet resistance within this range can effectively improve performance such as efficiency and service life of the battery.

In some embodiments, the positive electrode is an electrode plate, and a ratio of a thickness from one surface of the electrode plate to the opposite other surface to a thickness of the current collector is 7-16:1.

In some embodiments, the positive electrode is an electrode plate, and a ratio of a thickness from one surface of the electrode plate to the opposite other surface to a thickness of the current collector is 8-15:1.

By controlling the total thickness of the electrode plate and the thickness of the current collector to be within the above ratio range, the bonding strength between the positive electrode active material layer and the current collector can be improved, the mechanical strength of the electrode plate structure can be improved, and the cycling performance of the electrode plate can be improved, also improving the energy density of the battery.

In some embodiments, a conductive agent contained in the positive electrode active material layer includes a linear conductive agent.

In an embodiment, a mass content of the linear conductive agent in the positive electrode active material layer is 0.1% to 2.5%.

In an embodiment, a mass content of the linear conductive agent in the positive electrode active material layer is 0.2% to 0.8%.

In an embodiment, an aspect ratio of the linear conductive agent is 40-3000:1.

In an embodiment, an aspect ratio of the linear conductive agent is 50-2500:1.

In an embodiment, a length of the linear conductive agent is 0.5-5 $\mu$m.

In an embodiment, a length of the linear conductive agent is 0.5-2 $\mu$m.

In an embodiment, a diameter of the linear conductive agent is 2-10 nm.

In an embodiment, a diameter of the linear conductive agent is 3-7 nm.

In an exemplary embodiment, the linear conductive agent includes at least one of carbon nanotubes, carbon fibers, and conductive oxide nanowires.

Adding a linear conductive agent to the positive electrode active material layer, and controlling the content of the linear conductive agent to be within this range, and controlling the type, aspect ratio, length, and diameter of the linear conductive agent to b ewithin the above ranges, makes the linear conductive agent form a rich conductive network structure in the positive electrode active material layer, and the linear conductive agent can also wrap around the surface of flat single crystal particles. When particulate conductive agents are also added to the positive electrode active material layer, the particulate conductive agents can be effectively dispersed in the gaps of the positive electrode material. In this way, the linear conductive agent constructs a long-range conductive network structure in the positive electrode active material layer, and the particulate conductive agent forms a short-range conductive structure. Therefore, the synergistic conductive effect of the linear conductive agent and the particulate conductive agent in the positive electrode active material layer effectively improves the conductivity of the positive electrode active material layer and can significantly reduce the internal resistance of the positive electrode.

According to a fourth aspect, embodiments of this application provide a sodium battery. The sodium battery in embodiments of this application includes the positive electrode in embodiments of this application described above.

The sodium battery in embodiments of this application contains the positive electrode in embodiments of this application described above; therefore the sodium battery in embodiments of this application has high energy density and

good cycling performance.

In some embodiments, the sodium battery is a sodium battery cell, and an operating voltage of the sodium battery cell is 1.5-4.0 V.

According to a fifth aspect, embodiments of this application provide an electric apparatus, which in embodiments of this application includes the sodium battery in embodiments of this application.

The electric apparatus in embodiments of this application has long standby or endurance time and long service life.

The above description is only an overview of the technical solutions of this application. To more clearly understand the technical means of this application and to implement it according to the content of the specification, and to make the above and other purposes, features, and advantages of this application more obvious and easy to understand, specific embodiments of this application are specifically illustrated below.

## DESCRIPTION OF DRAWINGS

By reading the detailed description of the preferred embodiments below, various other advantages and benefits will become clear to those of ordinary skill in the art. The drawings are only for the purpose of illustrating the preferred embodiments and are not considered to limit this application. Moreover, the same reference numerals are used to denote the same components in all the drawings. In the drawings:

FIG. 1 is a scanning electron microscope (SEM) image of the layered oxide provided in example A3 of this application;
FIG. 2 is a schematic structural diagram of a positive electrode in some embodiments of this application;
FIG. 3 is another schematic structural diagram of a positive electrode in some embodiments of this application;
FIG. 4 is a schematic structural diagram of one embodiment of a sodium battery cell in embodiments of this application;
FIG. 5 is an exploded schematic diagram of the sodium battery cell shown in FIG. 4;
FIG. 6 is a schematic structural diagram of one embodiment of a battery module in embodiments of this application;
FIG. 7 is a schematic structural diagram of one embodiment of a battery pack in embodiments of this application;
FIG. 8 is an exploded structural schematic diagram of the battery pack shown in FIG. 7; and
FIG. 9 is a schematic diagram of one embodiment of an electric apparatus including the battery in embodiments of this application as a power source.

The reference numerals in specific embodiments are as follows:

10-positive electrode, 11-current collector, 12-positive electrode active material layer;
20-battery cell, 21-housing, 22-electrode assembly, 23-cover plate;
30-battery module;
40-battery pack, 41-upper case, 42-lower case.

## DESCRIPTION OF SPECIFIC EMBODIMENTS

Embodiments of the technical solutions of this application will be described in detail below with reference to the accompanying drawings. The following embodiments are only used to more clearly illustrate the technical solutions of this application and thus serve as examples only, and cannot be used to limit the protection scope of this application.

Unless otherwise defined, all technical and scientific terms used herein have the same meaning as commonly understood by one of ordinary skill in the technical field to which this application belongs; the terms used herein are only for the purpose of describing specific embodiments and are not intended to limit this application; the terms "including" and "having" and any variations thereof in the specification and claims of this application and the above description of drawings are intended to cover non-exclusive inclusion.

In the description of the embodiments of this application, the technical terms "first", "second", or the like are only used to distinguish different objects and should not be understood as indicating or implying relative importance or implicitly indicating the number, specific order, or primary and secondary relationship of the indicated technical features. In the description of the embodiments of this application, "plurality" means two or more unless otherwise clearly and specifically defined.

The mention of "an embodiment" herein means that a particular feature, structure, or characteristic described in connection with the embodiment can be included in at least one embodiment of this application. The appearance of the phrase in various places in the specification does not necessarily refer to the same embodiment, nor is it an independent or alternative embodiment that is mutually exclusive with other embodiments. Those of ordinary skill in the art explicitly and implicitly understand that the embodiments described herein can be combined with other embodiments.

In the description of the embodiments of this application, the term "and/or" is merely an association relationship

describing associated objects, indicating that three relationships can exist, for example, A and/or B can indicate: A exists alone, A and B exist simultaneously, or B exists alone. In addition, the character "/" in this text generally indicates that the associated objects before and after are in an "or" relationship.

In the description of the embodiments of this application, the term "plurality" refers to two or more (including two), similarly, "plurality of groups" refers to two or more groups (including two groups), and "plurality of sheets" refers to two or more sheets (including two sheets).

In the description of the embodiments of this application, the orientation or positional relationship indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", or the like is based on the orientation or positional relationship shown in the drawings, only for the convenience of describing the embodiments of this application and simplifying the description, and not indicating or implying that the referred device or element must have a specific orientation, be constructed and operated in a specific orientation, and thus cannot be understood as limiting the embodiments of this application.

In the description of the embodiments of this application, unless otherwise clearly specified and limited, the technical terms "mounted", "connected", "coupled", "fixed", or the like should be understood in a broad sense, for example, it may be a fixed connection, a detachable connection, or integrated; it may alternatively be a mechanical connection or an electrical connection; it may be a direct connection or an indirect connection through an intermediary, it can be the internal communication of two elements or the interaction relationship between two elements. For those of ordinary skill in the art, the specific meanings of the above terms in the embodiments of this application can be understood according to specific circumstances.

Sodium-ion batteries (sodium-ion battery, abbreviated as SIBs) have become ideal candidates for energy storage systems due to their abundant raw material reserves and low costs. Moreover, there is also huge application space in the new energy vehicle market. With the rapid development of energy storage systems and new energy vehicles, the requirements for energy density and cycle stability of sodium-ion batteries are also increasing.

For sodium-ion batteries, the positive electrode material of the sodium-ion battery can provide active sodium ions and is an important component of the sodium-ion battery, and is also one of the important factors affecting the energy density and cycling performance of the sodium-ion battery. In positive electrode materials of the sodium-ion battery, layered oxides have attracted much attention due to their high gram capacity and the structure similar to lithium-ion battery positive electrode materials.

According to the stacking order of oxygen atoms in the layered oxide, the layered oxide is currently mainly divided into P2 type and O3 type. Compared to P2-type layered oxides, O3-type layered oxides can store more $Na^+$, and can also exhibit higher reversible gram capacity within the same voltage range, thus having better commercialization prospects. Although layered oxides have relatively high gram capacity, with the continuous increase in market requirements for battery energy density, existing batteries can no longer well meet current market application requirements, thereby imposing higher requirements on the gram capacity of layered oxides.

To effectively improve the gram capacity of layered oxides, there are currently reports of using transition metals to dope layered oxides, for example, using iron elements to dope layered oxides, specifically using iron elements to dope manganese-nickel-based layered oxides. Through research, it has been found that although iron element doping can improve the gram capacity of layered oxides such as manganese-nickel-based layered oxides, during the sodium intercalation and deintercalation from the layered oxide, the iron element will migrate, for example, from the transition layer to the sodium ion layer, leading to a decrease in the structural stability of the layered oxide such as manganese-nickel-based layered oxide, thereby leading to a decrease in the gram capacity and cycling performance of the layered oxide. Further research has found that the higher the doping amount of iron element, the more obvious migration of the iron element, especially at higher voltages for example, above 4.0 V, migration of the iron element becomes more obvious, leading to a further decrease in the structural stability of the layered oxide such as manganese-nickel-based layered oxide, thereby further reducing the gram capacity and cycling performance of the layered oxide.

To improve the structural stability of iron-containing layered oxides, through research, it has been unexpectedly found that by controlling and adjusting the content ratio of the iron element and the manganese element in manganese-nickel-based layered oxides, or further using active and/or inert doping metal elements for doping, and controlling the content ratio of the doping metal elements, the arrangement of metal elements in the transition metal layer can be changed, thereby significantly reducing the migration of iron elements, improving the structural stability of manganese-nickel-based layered oxides, and thus significantly improving the gram capacity and cycling performance of manganese-nickel-based layered oxides. Based on the above research, embodiments of this application propose the following technical solution.

**Positive electrode material**

In a first aspect, embodiments of this application provide a positive electrode material. In some embodiments, the

positive electrode material in embodiments of this application includes a layered oxide represented by the following chemical formula (I):

$$Na_aNi_bFe_cMn_dM_eO_2;$$

where 0.8≤a≤1, 0≤b≤0.2, 0.25≤c≤0.5, 0.26≤d≤0.6, 0≤e≤0.1, 1.8≤f≤2, b+c+d+e≤1, and M is an active and/or inert doping metal element.

In the chemical formula (I) of the layered oxide contained in the positive electrode material in embodiments of this application, a, b, c, d, e, and f sequentially represent the stoichiometric content ratios of Na, Ni, Fe, Mn, the doping metal element represented by M, and the O element in the layered oxide. Therefore, the stoichiometric content ratio of the Na, Ni, Fe, Mn, M, and O elements contained in the layered oxide may be 0.8-1:0-0.2:0.25-0.5:0.26-0.6:0-0.1:1.8-2. In addition, the stoichiometric ratio of the Na, Ni, Fe, Mn, the doping metal element represented by M, and the O element may be a molar ratio or a mass ratio converted from the molar ratio. The active doping metal element represented by M refers to a type of metal element that has electrochemical redox activity in the layered oxide and mainly contributes to the gram capacity of the layered oxide. The inert doping metal element represented by M is relative to the active doping metal element and refers to a type of metal element that has relatively stable electrochemical redox activity in the layered oxide and mainly contributes to the crystal structure stability of the layered oxide. The layered oxide refers to a positive electrode material composed of a transition metal layer ($TMO_6$) containing Ni, Mn, and Fe elements or further containing the doping metal element represented by M, and a sodium layer ($NaO_6$) alternately arranged.

The Fe element contained in the layered oxide of the positive electrode material in embodiments of this application has a redox couple of $Fe^{2+}/Fe^{3+}$. By optimizing the transition metal layer ($TMO_6$) structure of the layered oxide represented by the chemical formula (I) through the Fe element or further through the active doping metal element represented by M, the arrangement of metal elements in the transition metal layer (mainly disordered arrangement) is adjusted, effectively improving the gram capacity of the layered oxide. On this basis, controlling the contents of the Fe element and the Mn element to be within the stoichiometric ratio ranges represented by d and c, or further controlling the content of the doping metal element (active or inert) represented by M to be within the stoichiometric ratio range represented by e (when e≠0), can also effectively alleviate migration of the Fe element occurring during the sodium intercalation and deintercalation from the layered oxide at high voltage, improving the structural stability of the layered oxide represented by the chemical formula (I). Therefore, for the layered oxide represented by the chemical formula (I), controlling the stoichiometric ratio of the Fe element and the Mn element or further controlling the stoichiometric ratio of the doping metal element represented by M effectively adjusts the arrangement of metal elements in the transition metal layer contained in the layered oxide represented by the chemical formula (I) and the spacing between the transition metal layer and the sodium layer, improving the gram capacity of the layered oxide, while alleviating migration of the iron element during the sodium intercalation and deintercalation, and improving the structural stability of the layered oxide to improve the cycling performance of the layered oxide.

Furthermore, for the layered oxide represented by the above chemical formula (I), through the stoichiometric ratio of the Fe element and the Mn element, plus optimization of the transition metal layer ($TMO_6$) structure containing the Mn element or further containing the Ni element with the Fe element or further with the doping metal element represented by M, ordered transition of $Na^+$ and vacancies in the layered oxide during charging and discharging can be effectively inhibited, reducing the diffusion energy barrier of $Na^+$, and improving the diffusion rate of sodium ions contained in the layered oxide, thereby improving the DCR growth of the battery cell. Moreover, the content of the Ni element is effectively reduced, such as the stoichiometric content range represented by b, reducing the economic costs of the layered oxide.

In an exemplary embodiment, in the chemical formula (I) of the layered oxide contained in the positive electrode material in embodiments of this application, the stoichiometric content a of the Na element may be further 0.85≤a≤1. Based on the value range of a in the chemical formula (I), in the exemplary embodiment, a may be typical but non-limiting stoichiometric contents such as 0.8, 0.85, 0.9, 0.95, 1.0, or any range between two stoichiometric content values. The Na element within this content range improves the reversible capacity of the layered oxide represented by the chemical formula (I).

In some embodiments, in the chemical formula (I) of the layered oxide contained in the positive electrode material in embodiments of this application, the stoichiometric content b of the Ni element may be 0≤b≤0.18, further 0.05≤b≤0.18. Based on the value range of b in the chemical formula (I), in the exemplary embodiment, b may be typical but non-limiting stoichiometric contents such as 0, 0.01, 0.02, 0.03, 0.04, 0.05, 0.06, 0.07, 0.08, 0.09, 0.1, 0.11, 0.12, 0.13, 0.14, 0.15, 0.16, 0.17, 0.18, 0.19, 0.2, or any range between two stoichiometric content values. The Ni element within this content range can, on the one hand, under the doping of the Mn element or further co-doping with the doping metal element represented by M, effectively reduce the content of inactive impurity phases such as NiO in the layered oxide, thereby further improving the structural stability of the layered oxide during the sodium intercalation and deintercalation. In addition, the Fe element or further the active doping metal element represented by M, especially the Fe element, can also replace part of the Ni element, reducing the content of the Ni element, for example, making the content of the Ni element within the stoichiometric

content range represented by b, thereby reducing the costs of the layered oxide on the basis of not reducing the gram capacity of the layered oxide represented by the chemical formula (I) and correspondingly improving the battery energy density.

In some embodiments, in the chemical formula (I) of the layered oxide contained in the positive electrode material in embodiments of this application, the stoichiometric content c of the Fe element can be further $0.3 \leq c \leq 0.5$. Based on the value range of c in the chemical formula (I), in the exemplary embodiment, c may be typical but non-limiting stoichiometric contents such as 0.25, 0.3, 0.3, 0.35, 0.35, 0.4, 0.4, 0.45, 0.45, 0.48, 0.5, or any range between two stoichiometric content values. The Fe element within this stoichiometric content range can, together with the Mn element within the stoichiometric content represented by c or further with the doping metal element represented by M, jointly optimize the structure of the transition metal layer in the layered oxide represented by the chemical formula (I), further reducing migration of the Fe element, and improving the structural stability of the layered oxide represented by the chemical formula (I) during the sodium intercalation and deintercalation. In addition, the Fe element replaces part of the Ni element, reducing the content of the Ni element on the basis of improving the gram capacity and energy density of the layered oxide represented by the chemical formula (I), thereby reducing the cost of the layered oxide represented by the chemical formula (I).

In some embodiments, in the chemical formula (I) of the layered oxide contained in the positive electrode material in embodiments of this application, the stoichiometric content d of the Mn element may be $0.3 \leq d \leq 0.6$, further $0.3 \leq d \leq 0.45$. Based on the value range of d in the chemical formula (I), in the exemplary embodiment, d may be typical but non-limiting stoichiometric contents such as 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.5, 0.55, 0.6, or any range between two stoichiometric content values. The Mn element within this stoichiometric content range can, on the one hand, under the doping of the Fe element or further co-doping with the doping metal element represented by M, adjust the arrangement of metal elements in the transition metal layer to further inhibit migration of the Fe element occurring during the sodium intercalation and deintercalation, while reducing the Jahn-Teller effect caused by the Mn element and the Ni element, further improving the structural stability of the layered oxide during the sodium intercalation and deintercalation; on the other hand, it can also adjust the average oxidation state and lattice space of the layered oxide represented by the chemical formula (I), improving the diffusion rate of Na ions, thereby improving the DCR growth of the battery cell.

In some embodiments, in the chemical formula (I) of the layered oxide contained in the positive electrode material in embodiments of this application, the stoichiometric content e of the doping metal element represented by M may be $0.02 \leq e \leq 0.1$, further $0.03 \leq e \leq 0.1$. Based on the value range of e in the chemical formula (I), e may be typical but non-limiting stoichiometric contents such as 0, 0.01, 0.02, 0.03, 0.05, 0.06, 0.07, 0.08, 0.09, 0.1, or any range between two stoichiometric content values. When $e>0$, that is, when the layered oxide represented by the chemical formula (I) contains the doping metal element represented by M, the doping metal element represented by M within this stoichiometric content range can further dope the transition metal layer contained in the layered oxide represented by the chemical formula (I), and together with metal elements such as the Mn element and the Fe element, further adjust the arrangement of metal elements in the transition metal layer and the spacing between the transition metal layer and the sodium layer. This further reduces migration of the Fe element, improves the structural stability of the layered oxide during the sodium intercalation and deintercalation, and further improves the cycle stability of the layered oxide. When the doping metal element represented by M is an active doping metal element, it can further improve the gram capacity of the layered oxide together with the Fe element, thereby improving the energy density of the battery.

In an embodiment, the doping metal element represented by M may include at least one of Zn, V, Cr, Al, Sc, Sn, Sb, Zr, Nb, Ti, Mg, Cu, Ru, and Ir. The active doping metal element represented by M may include at least one of metal elements Zn, V, Cr, Nb, Cu, Sc, Sn, and Sb, and the inert doping metal element represented by M may include at least one of metal elements Zr, Al, Ru, Ir, Mg, and Ti. Selecting and controlling the doping metal element represented by M within these element types, together with elements such as Fe, optimizes the transition metal layer structure contained in the layered oxide represented by the chemical formula (I), adjusting the arrangement of metal elements in the transition metal layer and the spacing between the transition metal layer and the sodium layer, assisting the Mn element in further reducing migration of the Fe element, to further improve the structural stability of the layered oxide represented by the chemical formula (I) during the sodium intercalation and deintercalation, and further improving the utilization of gram capacity and cycling performance of the layered oxide. When the doping metal element represented by M is an active doping metal element, it can also further enhance the gram capacity of the layered oxide together with the Fe element, thereby improving the energy density of the battery.

In an exemplary embodiment, in the chemical formula (I) of the layered oxide contained in the positive electrode material in embodiments of this application, the stoichiometric content f of O may be typical but non-limiting stoichiometric contents such as 1.8, 1.9, 2, or any range between two stoichiometric content values.

Based on the value ranges of a, b, c, d, and e in the above embodiments, in some embodiments, a, b, c, d, and e in the chemical formula (I) of the layered oxide can simultaneously be within the following value ranges: $0.85 \leq a \leq 1$, $0 \leq b \leq 0.18$, $0.3 \leq c \leq 0.5$, $0.3 \leq d \leq 0.6$, and $0.02 \leq e \leq 0.1$. In this case, the stoichiometric content ratio of Na, Ni, Mn, Fe, and the doping metal element represented by M contained in the layered oxide represented by the chemical formula (I)

may be 0.85-1:0-0.18:0.3-0.5:0.3-0.6:0.02-0.1. By controlling the stoichiometric ratio of Na, Ni, Mn, Fe, and the doping metal element represented by M to be within this range, the arrangement of metal elements in the transition metal layer in the layered oxide represented by the chemical formula (I) and the spacing between the transition metal layer and the sodium layer can be further adjusted, further alleviating migration of the Fe element, improving the structural stability of the layered oxide during the sodium intercalation and deintercalation, and improving the gram capacity and cycling performance of the layered oxide. In addition, the electrochemical performance and processing performance of the layered oxide can be further improved.

Based on the value ranges of a, b, c, d, and e in the above embodiments, in some embodiments, the total stoichiometric amount of the Ni element, the Mn element, and the Fe element in the chemical formula (I) of the layered oxide, or the total stoichiometric amount of the Ni element, the Mn element, the Fe element, and the doping metal element represented by M, and the stoichiometric amount of the Na element are in a ratio of 1:(0.85-0.95), optionally 1:(0.86-0.94). In an exemplary embodiment, it may be typical but non-limiting molar ratios such as 1:0.85, 1:0.86, 1:0.88, 1:0.9, 1:0.92, 1:0.93, 1:0.94, 1:0.95, or any range between two molar ratio values. The stoichiometric amount may be a molar number and mass converted from the molar number. Controlling the stoichiometric ratio of the Na element to other metal elements contained in the layered oxide represented by the chemical formula (I) to be within this range can further improve the content of insertable and deinsertable sodium ions in the layered oxide, thereby improving the gram capacity of the layered oxide; moreover, the sodium ions within this content range can improve the O3 crystal phase content of the layered oxide represented by the chemical formula (I), making the layered oxide represented by the chemical formula (I) mainly exhibit O3 crystal, thereby improving the structural stability of the layered oxide represented by the chemical formula (I) to improve its cycling performance.

In some embodiments, the total stoichiometric amount of the Mn element and the doping metal element represented by M in the chemical formula (I) of the layered oxide and the stoichiometric amount of the Fe element are in a ratio of 0.9-1.5:1, optionally 1-1.2:1. In an exemplary embodiment, it may be typical but non-limiting molar ratios such as 0.9:1, 0.95:1, 1.05:1, 1.1:1, 1.15:1, 1.2:1, 1.3:1, 1.4:1, 1.5:1, or any range between two molar ratio values. The stoichiometric amount may also be a molar number and mass converted from the molar number. In this case, when e=0 in the chemical formula (I), the content of M is equal to 0, indicating the stoichiometric ratio of the Mn element to the Fe element; when e>0 in the chemical formula (I), the content of M is greater than 0, indicating the total stoichiometric amount of the Mn element and the doping metal element represented by M to the stoichiometric amount of the Fe element. Controlling the stoichiometric ratio of the Mn element or further the doping metal element represented by M to the Fe element to be within this range can further adjust the arrangement of metal elements in the transition metal layer and the spacing between the transition metal layer and the sodium layer, to further exert the role of the Mn element, further alleviate migration of the Fe element, thereby improving the stability of iron in the transition metal layer, improving the structural stability of the layered oxide during the sodium intercalation and deintercalation, and improving the gram capacity and cycling performance of the layered oxide.

Based on the value ranges of a, b, c, d, and e in the above embodiments, in some embodiments, the layered oxide represented by the chemical formula (I) in the above embodiments may include at least one of $Na_{0.87}Ni_{0.2}Fe_{0.3}Mn_{0.45}O_2$, $Na_{0.87}Ni_{0.2}Fe_{0.35}Mn_{0.45}O_2$, $Na_{0.85}Ni_{0.1}Fe_{0.387}Mn_{0.43}O_2$, $Na_{0.85}Ni_{0.05}Fe_{0.45}Mn_{0.45}O_2$, Na0.87Ni0.05Fe0.5Mn0.45O2, Na0.85Ni0.1Fe0.38Mn0.437Zn0.082O2, Na0.85Ni0.1Fe0.38Mn0.437V0.082O2, Na0.85Ni0.1Fe0.38Mn0.437Cr0.082O2, Na0.85Ni0.1Fe0.38Mn0.437Al0.082O2, Na0.85Ni0.1Fe0.38Mn0.437Sc0.082O2, Na0.85Ni0.1Fe0.38Mn0.437Sn0.082O2, Na0.85Ni0.1Fe0.38Mn0.437Sb0.082O2, Na0.85Ni0.1Fe0.38Mn0.437Zr0.082O2, Na0.85Ni0.1Fe0.38Mn0.437Nb0.082O2, Na0.85Ni0.1Fe0.38Mn0.437Ti0.082O2, Na0.85Ni0.2Fe0.28Mn0.437Mg0.082O2, Na0.85Ni0.1Fe0.38Mn0.437Ru0.082O2, Na0.85Ni0.1Fe0.38Mn0.437Ir0.082O2, Na0.85Ni0.1Fe0.38Mn0.437Al0.04Zn0.04O2, Na0.85Ni0.1Fe0.38Mn0.267Zn0.082O2, $Na_{0.85}Fe_{0.4}Mn_{0.6}O_2$, Na0.92Ni0.15Fe0.34Mn0.45O2, $Na_{0.92}Ni_{0.15}Fe_{0.41}Mn_{0.44}O_2$, $Na_{0.92}Ni_{0.05}Fe_{0.5}Mn_{0.45}O_2$, Na0.92Fe0.38Mn0.6O2, Na0.92Ni0.1Fe0.38Mn0.437Zn0.082O2, Na0.92Ni0.1Fe0.38Mn0.367Zn0.082O2, and $Na_{0.92}Ni_{0.1}Fe_{0.494}Mn_{0.395}O_2$. In these molecular formulas of layered oxides, with the Mn element or when containing the doping metal element represented by M, the stabilizing effect can be further exerted on the Fe element, to further reduce migration of the Fe element, further improving the stability of the iron element in the transition metal layer, and improving the gram capacity and cycling performance of the layered oxide. In addition, the content of the Ni element in the layered oxide represented by the chemical formula (I) can be further reduced. On the basis of improving the gram capacity and cycling performance of the layered oxide represented by the chemical formula (I), the economic costs of the layered oxide can be reduced. In addition, the electrochemical performance and processing performance of the layered oxide can be further improved.

Upon testing, in some embodiments, the crystal structure of the layered oxide represented by the chemical formula (I) in the above embodiments includes an O3-phase layered metal oxide. The O3-phase layered metal oxide refers to a type of layered oxide with a crystal structure in which the contained oxygen atoms are stacked in an ABCABC manner. In the embodiments, the layered oxide represented by the chemical formula (I) in the above embodiments is mainly an O3-phase layered metal oxide. Being mainly an O3-phase layered metal oxide means that in the layered oxide represented by

the chemical formula (I), the weight proportion of the O3-phase layered metal oxide, that is, the O3-phase layered metal oxide accounts for more than 95% of the total weight of the layered oxide represented by the chemical formula (I), further more than 98%, and of course includes cases where the weight proportion of the O3-phase layered metal oxide in the layered oxide represented by the chemical formula (I) can reach 100%. A higher weight proportion of the O3-phase layered metal oxide in the layered oxide represented by the chemical formula (I) is more desirable. The layered oxide represented by the chemical formula (I) mainly exists as an O3-phase layered metal oxide or as a pure O3-phase layered metal oxide, further improving the stability of the Fe element, and making the layered oxide have relatively high structural stability, such as relatively high structural stability compared to P2-phase layered metal oxides, and higher gram capacity and cycling performance. The crystal phase of the layered oxide can be analyzed using an XRD diffractometer as described below.

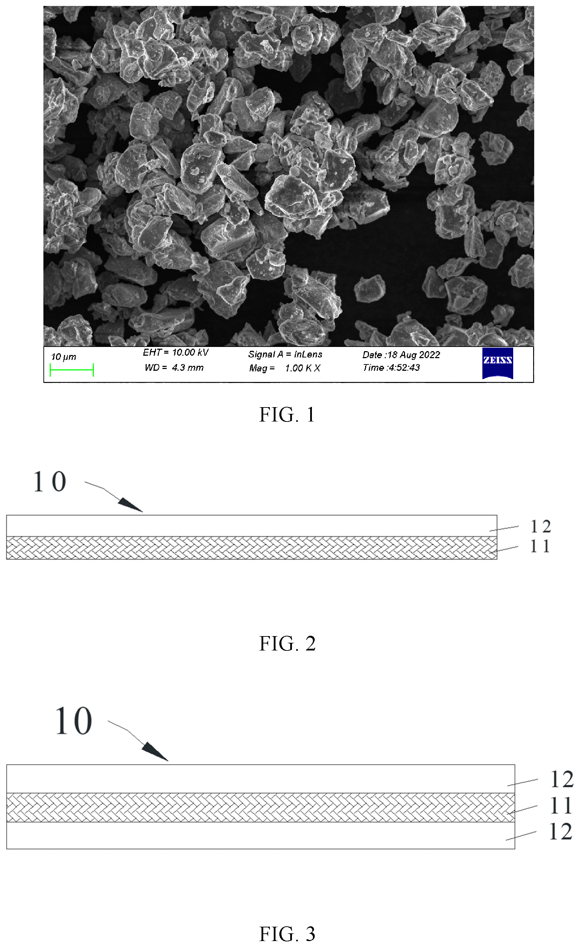

In some embodiments, upon electron microscope analysis, the crystal of the layered oxide represented by the chemical formula (I) in the above embodiments includes single crystals, and certainly may further include polycrystals. The single crystal is blocky, as shown in FIG. 1. Since the layered oxide is mainly an O3-phase layered metal oxide, the O3-phase layered metal oxide is a single crystal with high structural stability. The crystal morphology of the layered oxide can be analyzed using the scanning electron microscope measurement method for lengths in the micrometer range according to GB/T 16594-1996 as described below.

In the embodiments, upon testing, the $D_v50$ particle size of the layered oxide represented by the chemical formula (I) in the above embodiments is 3-9 μm, optionally 4.2-8.5 μm, and in exemplary embodiments, the $D_v50$ particle size may be typical but non-limiting particle sizes such as 3 μm, 4 μm, 4.2 μm, 5 μm, 6 μm, 7 μm, 8 μm, 8.5 μm, 9 μm, or any range between two particle size values. The $D_v50$ particle size is for particles of the powder of the layered oxide represented by the chemical formula (I). The $D_v50$ particle size may be the particle size of the layered oxide represented by the chemical formula (I) of the above single crystal, or the particle size of the layered oxide represented by the chemical formula (I) of the above polycrystal. Certainly, it can also be the particle size of a mixture of the single crystal and polycrystal particles. The $D_v50$ particle size of the layered oxide can be tested by using the specific method in GB/T 16418, or can be tested by referring to the method on pages 4-10 of GB/T 19077-2016 (Particle Size Distribution - Laser Diffraction Method).

The $D_v50$ particle size of the layered oxide represented by the chemical formula (I) in the above embodiments and the distribution range of the single crystal size of the O3-phase layered metal oxide contained therein make the layered oxide have high compacted density, thereby improving the compacted density of the positive electrode material in embodiments of this application and improving the energy density of the battery. In addition, the layered oxide has an appropriate specific surface area.

Upon testing, in the embodiments, the specific surface area (BET) of the layered oxide represented by the chemical formula (I) in the above embodiments is 0.4-1.5 $m^2/g$, optionally 0.5-0.95 $m^2/g$, and in exemplary embodiments, it may be typical but non-limiting specific surface areas such as 0.4 $m^2/g$, 0.5 $m^2/g$, 0.6 $m^2/g$, 0.7 $m^2/g$, 0.8 $m^2/g$, 0.9 $m^2/g$, 0.95 $m^2/g$, 1 $m^2/g$, 1.1 $m^2/g$, 1.2 $m^2/g$, 1.3 $m^2/g$, 1.4 $m^2/g$, 1.5 $m^2/g$, or any range between two specific surface area values. The specific surface area within this range can improve the stability of the interface between the layered oxide and the electrolyte, thereby improving the electrochemical performance such as the cycling performance of the battery. The specific surface area of the layered oxide can be tested according to the method in the GB/T 19587-2017 standard as described below.

Upon testing, the layered oxide represented by the chemical formula (I) in the above embodiments has a powder compacted density under a pressure of 2 tons higher than 2.7 $g/cm^3$, optionally 2.7-3.0 $g/cm^3$, and in exemplary embodiments, the powder compacted density under a pressure of 2 tons may be typical but non-limiting compaction densities such as 2.7 $g/cm^3$, 2.8 $g/cm^3$, 2.9 $g/cm^3$, 3 $g/cm^3$, or any range between two compacted density values.

In the embodiments, the layered oxide represented by the chemical formula (I) in the above embodiments has a powder compacted density under a pressure of 3 tons higher than 3.0 $g/cm^3$, optionally 3.0-3.3 $g/cm^3$, and in exemplary embodiments, the powder compacted density under a pressure of 3 tons may be typical but non-limiting compaction densities such as 3.0 $g/cm^3$, 3.1 $g/cm^3$, 3.2 $g/cm^3$, 3.3 $g/cm^3$, or any range between two compacted density values.

The above powder compacted density being higher than should be understood as being greater than or equal to, and the above powder compacted density range can improve the gram capacity of the battery containing the layered oxide represented by the chemical formula (I) above and the corresponding electrochemical performance. The powder compacted density can be tested according to the method in the GB/T 24533-2019 standard as described below.

Based on the morphology, crystal type, particle size, compacted density, and other properties of the layered oxide represented by the chemical formula (I) in the above embodiments, in the embodiments, upon testing, the charging gram capacity of the layered oxide at 1.5-4.2 V and 0.1C is 130-150 mAh/g, optionally 132-150 mAh/g; the discharging gram capacity is 129-140 mAh/g, optionally 130-144 mAh/g. In other embodiments, the first-cycle efficiency of the layered oxide at 1.5-4.2 V and 0.1C is higher than, namely greater than or equal to, 92%, optionally 92% to 98%.

The charging gram capacity and discharging gram capacity of the layered oxide, as well as the first-cycle efficiency, refer to the gram capacity and first-cycle efficiency of the layered oxide. Specifically, the layered oxide is prepared into a positive electrode for a sodium-ion button cell, assembled with a negative electrode into a sodium-ion button battery. The gram capacity and first-cycle efficiency are obtained by testing the sodium-ion button battery. From the

gram capacity and first-cycle efficiency range of the layered oxide, it can be seen that the structural stability of the layered oxide crystal has been significantly improved, with good structural stability during sodium intercalation and deintercalation, and high gram capacity cycling performance.

In the embodiments, the above sodium-ion button battery used for testing the charging gram capacity and discharging gram capacity as well as the first-cycle efficiency of the layered oxide is assembled according to the following method.

Positive electrode plate: The layered oxide represented by the above chemical formula (I) is used as the positive electrode active material, mixed with conductive agent carbon nanotubes, conductive agent carbon black, and binder polyvinylidene fluoride (PVDF) in a weight ratio of 95:0.5:2:2.5 in an appropriate amount of solvent NMP, and fully stirred and mixed to form a uniform positive electrode slurry. The positive electrode slurry is uniformly applied onto the surface of a 13 $\mu$m positive electrode current collector aluminum foil, dried and cold-pressed to obtain the positive electrode plate.

Negative electrode plate: Hard carbon, conductive agent SP, and CMC binder are added to deionized water in a weight ratio of 8:1:1, fully stirred and mixed to form a uniform negative electrode slurry. The negative electrode slurry is uniformly applied onto the surface of a 6 $\mu$m copper foil, dried and cold-pressed to obtain the negative electrode plate.

Electrolyte: 1 M $NaPF_6$/(EC/DEC, volume ratio 1:1).

Separator: Glass fiber.

Sodium-ion button battery assembly: The above positive electrode plate, glass fiber membrane, and negative electrode plate are stacked in order, assembled to form a button battery assembly, the electrode assembly is placed into a packaging shell, 1 M $NaPF_6$/(EC/DEC, volume ratio 1:1) electrolyte is added, and after packaging, formation, standing, and other processes, the sodium-ion battery is obtained.

Based on the above embodiments, the positive electrode material in embodiments of this application can contain only the layered oxide represented by the chemical formula (I) in the above embodiments. Certainly, it can further include other positive electrode materials, such as one or more of polyanionic compounds, Prussian blue compounds, and other layered oxides.

In exemplary embodiments, the polyanionic compound may include at least one of sodium vanadium phosphate, sodium iron pyrophosphate, sodium iron phosphate, and sodium fluorophosphate.

In exemplary embodiments, the Prussian blue compound may include at least one of $Na_2Fe[Fe(CN)_6]$, $Na_2Mn[Fe(CN)_6]$, and $Na_2Mn[Mn(CN)_6]$.

The above other positive electrode materials, together with the layered oxide represented by the above chemical formula (I), can further improve the energy density, reversible capacity, cycling performance, and other electrochemical properties of the battery containing the positive electrode material in embodiments of this application.

**Preparation Method of Positive electrode material**

In a second aspect, embodiments of this application provide a preparation method for the positive electrode material in embodiments of this application above. In some embodiments, the preparation method for the positive electrode material in embodiments of this application includes the following steps:

S10: providing a precursor of $Na_aNi_bFe_cMn_dM_eO_f$; and

S20: performing sintering treatment on the precursor to obtain a layered oxide having a chemical formula of $Na_aNi_bFe_cMn_dM_eO_f$.

In step S10 of the preparation method for the positive electrode material in embodiments of this application, the precursor of $Na_aNi_bFe_cMn_dM_eO_f$ is the precursor of the layered oxide represented by the chemical formula (I) contained in the positive electrode material in embodiments of this application above. Therefore, a, b, c, d, e, and f contained in $Na_aNi_bFe_cMn_dM_eO_f$ in S10 are in the following ranges respectively:
$0.8 \leq a \leq 1$, optionally $0.85 \leq a \leq 1$; $0 \leq b \leq 0.2$, optionally $0 \leq b \leq 0.18$, further optionally $0.05 \leq b \leq 0.2$; $0.25 \leq c \leq 0.5$, optionally $0.3 \leq c \leq 0.5$; $0.26 \leq d \leq 0.6$, optionally $0.3 \leq d \leq 0.6$; $0 \leq e \leq 0.1$, optionally $0.02 \leq e \leq 0.1$, further $0.03 \leq e \leq 0.1$; $1.8 \leq f \leq 2$; $b+c+d+e \leq 1$; and M is an active and/or inert doping metal element. In exemplary embodiments, the doping metal element includes at least one of Zn, V, Cr, Al, Sc, Sn, Sb, Zr, Nb, Ti, Mg, Cu, Ru, and Ir. The sintering treatment in step S20 is to make the precursor of $Na_aNi_bFe_cMn_dM_eO_f$ in step S10 react to generate the layered oxide represented by the chemical formula (I) contained in the positive electrode material in embodiments of this application above.

According to the preparation method for the positive electrode material in embodiments of this application, the layered oxide represented by the chemical formula $Na_aNi_bFe_cMn_dM_eO_f$ in the above embodiments of this application is generated by sintering the precursor of $Na_aNi_bFe_cMn_dM_eO_f$. Therefore, with the stoichiometric ratio of the Fe element and Mn in the layered oxide prepared by using the preparation method for the positive electrode material in embodiments of this application, the migration of iron element can be effectively reduced, improving the structural stability of the layered oxide during the sodium intercalation and deintercalation, and making the prepared layered oxide have high gram capacity and

energy density, and good cycling performance. In addition, it also has performance such as a high sodium ion diffusion rate, thereby improving the DCR growth of the battery cell. Moreover, by effectively controlling the conditions of the sintering treatment of the precursor of $Na_aNi_bFe_cMn_dM_eO_f$, the stability of the structure and electrochemical performance of the layered oxide having the chemical formula $Na_aNi_bFe_cMn_dM_eO_f$ can be improved.

Step S10:

The precursor of $Na_aNi_bFe_cMn_dM_eO_f$ in step S10 may be prepared by a solid-phase method or a precipitation method using a sodium source, a nickel source, a manganese source, an iron source, and an M doping element source based on the elemental stoichiometric ratio such as molar ratio or mass ratio converted from the molar ratio contained in $Na_aNi_bFe_cMn_dM_eO_f$.

For preparing the precursor of $Na_aNi_bFe_cMn_dM_eO_f$ by a solid-phase method, in the embodiments, the precursor of $Na_aNi_bFe_cMn_dM_eO_f$ may be prepared by using a method including the following step.

Step S11: Based on the stoichiometric ratio of the elements in $Na_aNi_bFe_cMn_dM_eO_f$, perform solid-phase mixing treatment on a sodium source, a nickel source, a manganese source, an iron source, and an M doping element source to obtain the precursor of $Na_aNi_bFe_cMn_dM_eO_f$.

In step S11, the solid-phase mixing treatment is relative to liquid-phase mixing, and generally refers to not adding a solvent during the mixing treatment process, for example, not adding water, and performing dry mixing treatment on the solids of the sodium source, nickel source, manganese source, iron source, and M doping element source under solvent-free conditions.

To improve the uniform mixing of the sodium source, nickel source, manganese source, iron source, and M doping element source during the solid-phase mixing treatment, in the embodiments, the nickel source, manganese source, iron source, and M doping element source can be mixed first, and then the sodium source is added for further mixing treatment. This improves the uniform mixing of each source and enhances the safety of the solid-phase mixing treatment.

In the embodiments, the mixing treatment may include but is not limited to ball milling treatment. As long as it can improve the uniform mixing of the sodium source, nickel source, manganese source, iron source, and M doping element source, it is within the scope disclosed in the embodiments of this application. In the embodiments, when the mixing treatment is ball milling treatment, the ball milling speed can be controlled to 300-1000 rpm, optionally 400-600 rpm, and the ball milling treatment time may be 1 h to 6 h, optionally 2 h to 4 h. By performing the ball milling treatment, the uniform mixing of each source can be improved, thereby ultimately improving the stability of the structure and electrochemical performance of the layered oxide of $Na_aNi_bFe_cMn_dM_eO_f$ in step S20.

In exemplary embodiments, the sodium source may be a sodium salt, for example, at least one of sodium carbonate and sodium hydroxide.

In exemplary embodiments, the nickel source may be a soluble or insoluble nickel compound, such as nickel oxide (NiO) or a nickel salt. The nickel salt may include at least one of nickel nitrate, nickel carbonate, nickel hydroxide, and nickel sulfate.

In exemplary embodiments, the manganese source may be a soluble or insoluble manganese compound, such as manganese oxide ($Mn_2O_3$) or a manganese salt. The manganese salt may include at least one of manganese nitrate, manganese carbonate, manganese hydroxide, and manganese sulfate.

In exemplary embodiments, the iron source may be a soluble or insoluble iron compound, such as an iron oxide (for example, $Fe_2O_3$) or an iron salt. The iron salt may include at least one of iron nitrate, iron carbonate, iron hydroxide, and iron sulfate.

In exemplary embodiments, the M doping metal element source may be a soluble or insoluble compound of the M doping metal element, such as an oxide of the M doping metal element or a salt of the M doping metal element. The salt of the M doping metal element may include at least one of nitrate, carbonate, hydroxide, and sulfate of the M doping metal element.

The types of the above sodium source, nickel source, manganese source, iron source, and M doping element source can be effectively mixed uniformly during the mixing treatment process, improving the structure and chemical stability of the layered oxide of $Na_aNi_bFe_cMn_dM_eO_f$ generated from the precursor of $Na_aNi_bFe_cMn_dM_eO_f$.

After the precursor of $Na_aNi_bFe_cMn_dM_eO_f$ prepared by the above solid-phase method undergoes the sintering treatment in step S20, the generated layered oxide of $Na_aNi_bFe_cMn_dM_eO_f$ is mostly single crystal.

For preparing the precursor of $Na_aNi_bFe_cMn_dM_eO_f$ by a precipitation method, in the embodiments, the precursor of $Na_aNi_bFe_cMn_dM_eO_f$ may be prepared by using a method including the following steps.

Step S12: Based on the stoichiometric ratio of the elements in $Na_aNi_bFe_cMn_dM_eO_f$, prepare a mixed solution from a soluble nickel source, a soluble manganese source, a soluble iron source, and a soluble M doping element source, and add at least one of a precipitant and a complexing agent for co-precipitation treatment to obtain a precipitate mixture.

Step S13: Perform mixing treatment on the precipitate mixture with a sodium source to obtain the precursor of

$Na_aNi_bFe_cMn_dM_eO_f$.

In step S12, at least one of the precipitant and complexing agent should be a compound that can cause precipitation of nickel, manganese, iron, and the M doping metal element in the nickel source, soluble manganese source, soluble iron source, and soluble M doping element source, for example, in the embodiments, the precipitant may include at least one of alkali metal hydroxides and carbonates.

In the embodiments, the complexing agent may include inorganic or organic complexing agents. In exemplary embodiments, the inorganic complexing agent may include at least one of ammonia water, ammonium bicarbonate, ammonium sulfate, and ammonium carbonate; the organic complexing agent may include at least one of citric acid, tartaric acid, disodium ethylenediaminetetraacetate, ethylenediaminetetraacetic acid (EDTA), and nitrilotriacetic acid (NTA).

These types of precipitants and complexing agents can effectively precipitate nickel, manganese, iron, and the M doping element.

In the embodiments, at least one of the precipitant and complexing agent should be in excess relative to the total amount of metal elements such as total molar amount in the mixed solution, to ensure that all metal elements in the mixed solution are fully precipitated, thereby improving the accuracy of the stoichiometric ratio of metal elements contained in the precursor of $Na_aNi_bFe_cMn_dM_eO_f$. When an organic complexing agent is added in step S12, after the prepared precursor of $Na_aNi_bFe_cMn_dM_eO_f$ undergoes the sintering treatment in step S20, the generated layered oxide of $Na_aNi_bFe_cMn_dM_eO_f$ is mostly polycrystalline. When no organic complexing agent is added in step S12, after the prepared precursor of $Na_aNi_bFe_cMn_dM_eO_f$ undergoes the sintering treatment in step S20, the generated layered oxide of $Na_aNi_bFe_cMn_dM_eO_f$ is mostly single crystal.

In exemplary embodiments, the soluble nickel source may include at least one of nickel acetate, nickel chloride, nickel nitrate, and nickel sulfate.

In exemplary embodiments, the soluble manganese source may include at least one of manganese nitrate, manganese sulfate, and manganese halide.

In exemplary embodiments, the soluble iron source may include at least one of iron nitrate, manganese sulfate, and iron halide.

In exemplary embodiments, the soluble M doping metal element source may include at least one of nitrate, manganese sulfate, and halide of the M doping metal element.

The types of the above soluble nickel source, soluble manganese source, soluble iron source, and soluble M doping element source all have good solubility, and can quantitatively control the stoichiometric ratio of each metal element in the precipitate mixture.

The mixing ratio between the sodium source and the precipitate mixture in step S13 should satisfy the stoichiometric ratio of the sodium element in $Na_aNi_bFe_cMn_dM_eO_f$. The mixing treatment may be solid-phase mixing treatment or dissolving the soluble sodium source and then mixing with the precipitate mixture, followed by removing the solvent.

In exemplary embodiments, the sodium source may be a sodium salt, such as at least one of sodium carbonate and sodium hydroxide.

In addition, there is no sequential relationship between the above step S11 and steps S12 and S13.

Step S20:

After sintering treatment on the precursor of $Na_aNi_bFe_cMn_dM_eO_f$ in step S10 in step S20, a layered oxide having a chemical formula of $Na_aNi_bFe_cMn_dM_eO_f$ is generated. Research has found that the sintering treatment conditions have a certain impact on the structural stability and electrochemical performance of the generated layered oxide of $Na_aNi_bFe_cMn_dM_eO_f$. In some embodiments, the sintering treatment temperature can be controlled at 700-980°C, optionally 750-950°C, and in exemplary embodiments, it may be typical but non-limiting temperatures such as 700°C, 750°C, 800°C, 850°C, 900°C, 950°C, 980°C, or any range between two temperature values.

At the above sintering temperature, the sintering treatment time may be 3-20 h, optionally 5-12 h, and in exemplary embodiments, it may be typical but non-limiting hours such as 3 h, 4 h, 5 h, 8 h, 10 h, 12 h, 15 h, 18 h, 20 h, or any range between two hour values.

By controlling the stability and time of the sintering treatment to be within the above ranges, the precursor of $Na_aNi_bFe_cMn_dM_eO_f$ in step S10 can react to generate the layered oxide of $Na_aNi_bFe_cMn_dM_eO_f$, and can further improve the structural stability of the layered oxide of $Na_aNi_bFe_cMn_dM_eO_f$ during sodium intercalation and deintercalation, further improving the high gram capacity, energy density, and cycling performance of the layered oxide. In addition, the content of O3-phase layered metal oxide and the content of single crystals in the layered oxide of $Na_aNi_bFe_cMn_dM_eO_f$ can be increased and the single crystal size and particle size of the layered oxide can be controlled, thereby improving performance such as compacted density of the layered oxide.

In the embodiments, the temperature of the sintering treatment can be heated to the temperature of the sintering treatment at a heating rate of 2-15°C/min. The heating rate can be further controlled to 4-10°C/min, and in exemplary

embodiments, the heating rate may be typical but non-limiting rates such as 2°C/min, 4°C/min, 6°C/min, 8°C/min, 10°C/min, 12°C/min, 15°C/min, 17°C/min, 18°C/min, 20°C/min, or any range between two rate values. By controlling the heating rate of the sintering treatment, for example, controlling it to be within the heating rate range, the crystal integrity of the layered oxide of $Na_aNi_bFe_cMn_dM_eO_f$ can be improved, for example, improving the uniformity of crystal morphology.

In addition, the sintering treatment in the above step S20 should be understood to be performed in an oxygen-containing environment, for example, in the embodiments, sintering treatment in air or in an oxygen-containing protective atmosphere, for example, sintering treatment in oxygen-blended nitrogen or other inert atmospheres.

**Positive electrode**

In a third aspect, embodiments of this application provide a positive electrode. In some embodiments, the positive electrode in embodiments of this application includes a current collector and a positive electrode active material layer. The positive electrode active material layer is disposed on the surface of the current collector, and the positive electrode active material layer contains the positive electrode material in embodiments of this application above.

In the positive electrode in embodiments of this application, the current collector is a structure for collecting current and transmitting electrons. The positive electrode active material layer is a layer structure containing a positive electrode active material, which is a key substance participating in the battery chemical reaction in the positive electrode. The positive electrode active material includes the positive electrode material in embodiments of this application above. The combination of the positive electrode active material layer and the current collector means that the positive electrode active material layer is at least combined on the surface of the current collector. In addition, the positive electrode may be an electrode plate, and the electrode plate refers to the positive electrode having a sheet-like morphology. Certainly, it may alternatively be set to other morphologies as needed.

Since the positive electrode active material layer of the positive electrode in embodiments of this application contains the positive electrode material in embodiments of this application above, the positive electrode has a relatively high gram capacity and good cycling performance.

In the embodiments, the current collector contained in the positive electrode in embodiments of this application includes but is not limited to metal current collectors, carbon current collectors, conductive resin current collectors, composite current collectors of metal and resin, or the like, more specifically such as aluminum, copper, nickel, titanium, iron and their respective alloys, stainless steel, carbon fibers, carbon nanotubes (CNT), or graphite. In the embodiments, the current collector may alternatively be a dense film layer or a film layer with a porous structure. In the embodiments, the current collector may be but is not limited to aluminum foil or porous aluminum foil, or the like.

In the embodiments, the combination of the positive electrode active material layer and the current collector contained in the positive electrode in embodiments of this application can be at least stacked on the surface of the current collector. When the surface layer of the current collector contains a porous structure or the current collector itself is a porous structure, the positive electrode active material layer can be at least partially embedded into the current collector.

In some embodiments, the positive electrode active material layer being at least disposed on the surface of the current collector may be a structure shown in FIG. 2, where the positive electrode active material layer 12 is stacked on one surface of the current collector 11. When the surface of the current collector 11 has a porous structure or the current collector 11 as a whole is a porous structure, the positive electrode active material layer 12 can further extend into the porous structure of the current collector 11 in addition to being stacked on the surface of the current collector 11.

In other embodiments, the positive electrode active material layer being at least disposed on the surface of the current collector can be the structure shown in FIG. 3, where the current collector 11 has two oppositely disposed surfaces, and the positive electrode active material layer 12 is stacked on the two oppositely disposed surfaces of the current collector 11. When at least one of the two surfaces of the current collector 11 has a porous structure or the current collector 11 as a whole is a porous structure, the positive electrode active material layer 12 can further extend into the porous structure of the current collector 11 in addition to being stacked on the two surfaces of the current collector 11.

As an embodiment of this application, in the above positive electrode active material layer, the mass content of the layered oxide represented by the chemical formula (I) contained in the positive electrode material in embodiments of this application above in the positive electrode active material layer may be 90% to 99%, optionally 94% to 98%, and in exemplary embodiments, it may be typical but non-limiting contents such as 90%, 91%, 92%, 93%, 94%, 95%, 96%, 97%, 98%, 99%, or any range between two content values. The layered oxide within this content range can effectively improve the energy density of the positive electrode and has good cyclability.

In addition to containing the above positive electrode active material components, the positive electrode active material layer contained in the positive electrode in each of the above application embodiments generally further includes components such as a binder and a conductive agent. The binder can enhance the mechanical properties between the positive electrode active material layer itself and the current collector. The conductive agent can effectively improve the conductivity of the positive electrode, for example, reducing the resistance of the positive electrode.

In the embodiments, the mass content of the binder contained in the above positive electrode active material

layer may be 0.5% to 5%, optionally 1% to 3%, and in exemplary embodiments, it may be typical but non-limiting contents such as 0.5%, 0.8%, 1%, 1.3%, 1.5%, 1.8%, 2%, 2.3%, 2.5%, 2.8%, 3%, or any range between two content values.

In the embodiments, the binder may include one or more of oil-soluble binders, water-soluble binders, and emulsion-type binders. In exemplary embodiments, the oil-soluble binder may include one or more of polyvinylidene fluoride, polyimide, polytetrafluoroethylene, polybutyl acrylate, and polyacrylonitrile; in exemplary embodiments, the water-soluble binder may include one or more of carboxymethyl cellulose, carboxymethyl cellulose salt, polyacrylic acid, polyacrylate, polyvinyl alcohol, sodium alginate, and cyclodextrin. In exemplary embodiments, the emulsion-type binder includes one or more of styrene-butadiene rubber, vinyl acetate resin, acrylic resin, and chlorinated rubber.

The binder within this content range and of the above types can effectively enhance the mechanical properties of the positive electrode active material layer and the bonding strength with the current collector, effectively improving the cycling performance of the positive electrode.

In the embodiments, the mass content of the conductive agent contained in the above positive electrode active material layer may be 0.5% to 5%, optionally 1% to 3%, and in exemplary embodiments, it may be typical but non-limiting contents such as 0.5%, 0.8%, 1%, 1.3%, 1.5%, 1.8%, 2%, 2.3%, 2.5%, 2.8%, 3%, or any range between two content values.

In the embodiments, the conductive agent may include at least one of particulate conductive agents and linear conductive agents. The particulate conductive agent may include one or more of acetylene black (SP), conductive carbon black (super-P), Ketjenblack, and graphene. The linear conductive agent may include one or more of carbon nanotubes, carbon fibers, and conductive oxide nanowires. The particulate conductive agent is relative to the linear conductive agent and is a non-linear particulate morphology conductive agent. The linear conductive agent refers to a one-dimensional fibrous morphology conductive agent.

The conductive agent within this content range and of the above types can effectively improve the conductivity of the positive electrode active material layer.

In the embodiments, the conductive agent contained in the positive electrode active material layer of the positive electrode in the above embodiments includes a linear conductive agent and a particulate conductive agent. The mass content of the linear conductive agent in the positive electrode active material layer is 0.1% to 2.5%, optionally 0.2% to 0.8%, and in exemplary embodiments, it may be typical but non-limiting contents such as 0.1%, 0.2%, 0.3%, 0.4%, 0.5%, 0.6%, 0.7%, 0.8%, 1%, 1.3%, 1.5%, 1.8%, 2%, 2.3%, 2.5%, or any range between two content values. Since the crystal of the layered oxide represented by the chemical formula (I) contained in the positive electrode material in embodiments of this application above includes single crystals, and the morphology of the single crystal is blocky, adding a linear conductive agent to the positive electrode active material layer and controlling the content of the linear conductive agent to be within this range makes the linear conductive agent form a rich conductive network structure in the positive electrode active material layer, and the linear conductive agent can also wrap around the surface of the blocky single crystal particles. In some embodiments, when the positive electrode active material layer further includes a particulate conductive agent, the particulate conductive agent can be effectively dispersed in the gaps of the positive electrode material, so that the linear conductive agent constructs a long-range conductive network structure in the positive electrode active material layer, and the particulate conductive agent forms a short-range conductive structure. Therefore, the synergistic conductive effect of the linear conductive agent and the particulate conductive agent in the positive electrode active material layer effectively improves the conductivity of the positive electrode active material layer and can significantly reduce the internal resistance of the positive electrode.

In the embodiments, the aspect ratio of the above linear conductive agent can be controlled to 40-3000:1, optionally 50-2500:1, and in exemplary embodiments, it may be typical but non-limiting aspect ratios such as 40:1, 50:1, 100:1, 500:1, 1000:1, 1500:1, 2000:1, 2500:1, 3000:1, or any range between two aspect ratio values. The aspect ratio is a ratio of the length to the diameter of the above linear conductive agent.

In further embodiments, the length of the above linear conductive agent can be controlled to 0.5-5 μm, optionally 0.5-2 μm, and in exemplary embodiments, it may be typical but non-limiting lengths such as 0.5 μm, 1 μm, 1.5 μm, 2 μm, 2.5 μm, 3 μm, 3.5 μm, 4 μm, 4.5 μm, 5 μm, or any range between two length values.

In further embodiments, the diameter of the above linear conductive agent can be controlled to 2-10 nm, optionally 3-7 nm, and in exemplary embodiments, it may be typical but non-limiting diameters such as 2 nm, 3 nm, 4 nm, 5 nm, 6 nm, 7 nm, 8 nm, 9 nm, 10 nm, or any range between two diameter values.

By controlling the length and diameter and/or aspect ratio of the above linear conductive agent to be within the above range, the linear conductive agent can construct a richer long-range conductive network structure in the positive electrode active material layer. Further adding a particulate conductive agent can enhance the synergistic conductive effect of the linear conductive agent and the particulate conductive agent, to further improve the conductivity of the positive electrode active material layer.

In the embodiments, in addition to containing components such as positive electrode active material, binder, and conductive agent, the positive electrode active material layer in the positive electrode of the above embodiments can also contain other additives. In the embodiments, the additive may include but is not limited to functional components such as

sodium compensation additives.

In some embodiments, the content of the positive electrode active material layer on one side of the current collector in the above embodiments, that is, the coating weight (CW for short), is 250-330 mg/1540.25 $mm^2$, optionally 280-320 mg/1540.25 $mm^2$, and in exemplary embodiments, it may be typical but non-limiting contents such as 250 mg/1540.25 $mm^2$, 260 mg/1540.25 $mm^2$, 270 mg/1540.25 $mm^2$, 280 mg/1540.25 $mm^2$, 290 mg/1540.25 $mm^2$, 300 mg/1540.25 $mm^2$, 310 mg/1540.25 $mm^2$, 320 mg/1540.25 $mm^2$, 330 mg/1540.25 $mm^2$, or any range between two content values. The coating weight refers to the weight of the positive electrode active material layer per unit area. The coating weight within this range is beneficial for improving the energy density of the battery.

In some embodiments, the electrode plate compacted density of the positive electrode in the above embodiments may be 2.6 to 3.2 g/$cm^3$, optionally 2.8-3.0 g/$cm^3$, and in exemplary embodiments, it may be typical but non-limiting compaction densities such as 2.6 g/$cm^3$, 2.7 g/$cm^3$, 2.8 g/$cm^3$, 2.9 g/$cm^3$, 3.0 g/$cm^3$, 3.1 g/$cm^3$, 3.2 g/$cm^3$, or any range between two compacted density values. The compacted density refers to the weight of the positive electrode active material layer per unit volume. The compacted density within this range is beneficial for improving the energy density of the battery, and has good stability at the interface in contact with the electrolyte.

In some embodiments, the porosity of the positive electrode active material layer in the above embodiments may be 35% to 65%, optionally 40% to 58%, and in exemplary embodiments, it may be typical but non-limiting porosities such as 35%, 38%, 40%, 43%, 45%, 48%, 50%, 53%, 55%, 58%, 60%, 63%, 65%, or any range between two porosity values. The porosity refers to a percentage of the total volume of pores contained in the positive electrode active material layer per unit volume to the unit volume of the positive electrode active material layer. The porosity within this range can make the positive electrode electrode plate have the above compacted density, which is beneficial for improving the energy density of the battery, and also improving the wettability of the electrolyte.

In some embodiments, the positive electrode in the above embodiments is an electrode plate, and the sheet resistance of the positive electrode active material layer in the above embodiments may be 0.5-5 mΩ, optionally 0.5-3 mΩ, and in exemplary embodiments, it may be typical but non-limiting sheet resistances such as 0.5 mΩ, 1 mΩ, 1.5 mΩ, 2 mΩ, 2.5 mΩ, 3 mΩ, 3.5 mΩ, 4 mΩ, 4.5 mΩ, 5 mΩ, or any range between two sheet resistance values. The electrode plate is the sheet-like morphology described above, so it has two opposite surfaces. The sheet resistance is a resistance value between one surface and the opposite other surface of the sheet-like morphology positive electrode. The sheet resistance within this range can effectively improve performance such as efficiency and service life of the battery.

In some embodiments, the positive electrode in the above embodiments is an electrode plate, and a ratio of a thickness from one surface of the electrode plate to the opposite other surface to a thickness of the current collector is 7-16:1, optionally 8-15:1, and in exemplary embodiments, it may be typical but non-limiting ratios such as 7:1, 8:1, 9:1, 10:1, 11:1, 12:1, 13:1, 14:1, 15:1, 16:1, or any range between two ratio values. The thickness refers to a vertical distance from one surface to the opposite other surface of the layer structure. When the positive electrode active material layer is disposed on one surface of the current collector as shown in FIG. 2, the thickness from one surface of the electrode plate to the opposite other surface refers to the sum of the thickness of one positive electrode active material layer and the thickness of the current collector; when both surfaces of the current collector contain the positive electrode active material layer as shown in FIG. 3, the thickness from one surface of the electrode plate to the opposite other surface refers to the sum of the thicknesses of the two positive electrode active material layers plus the total thickness of the current collector.

In the embodiments, the thickness of the positive electrode active material layer contained in the electrode plate can be controlled to 91-156 μm, further 95-150 μm, and in exemplary embodiments, it may be typical but non-limiting thicknesses such as 91 μm, 95 μm, 100 μm, 110 μm, 120 μm, 130 μm, 140 μm, 150 μm, 156 μm, or any range between two thickness values. In the embodiments, the thickness of the current collector may be but is not limited to 13-15 μm.

By controlling the total thickness of the electrode plate and the thickness of the current collector to be within the above ratio range or specific thickness range, the bonding strength between the positive electrode active material layer and the current collector can be improved, the mechanical strength of the electrode plate structure can be improved, the cycling performance of the electrode plate can be improved, and in addition, it is beneficial for improving the energy density of the battery.

**Preparation method for the positive electrode:**

Embodiments of this application further provide a preparation method for the positive electrode in the above embodiments. In some embodiments, the preparation method for the positive electrode in the above embodiments includes the following steps:

S30: Mix components including positive electrode active material, binder, conductive agent, or the like, in proportion in a solvent to prepare a positive electrode slurry.

S40: Form a film of the positive electrode slurry on the current collector to form a positive electrode active material layer, obtaining the positive electrode.

Step S30:

The positive electrode active material in step S30 includes the positive electrode material in embodiments of this application above, specifically including the layered oxide represented by the chemical formula (I) above.

The components such as the positive electrode active material, binder, and conductive agent in step S30 can be mixed based on the content ratio of the corresponding components contained in the positive electrode active material layer of the above positive electrode. The solvent may be an organic solvent or water suitable for preparing the positive electrode slurry.

The mixing treatment in step S30 can be performed according to a conventional method for preparing electrode slurry, for example, including but not limited to stirring treatment, until the components are uniformly dispersed to form a stable positive electrode slurry. Certainly, the viscosity and other properties of the positive electrode slurry should meet the requirements of the film-forming process, so as to form a positive electrode active material layer meeting quality requirements on the current collector.

Step S40:

Based on the positive electrode slurry components prepared in step S30, the positive electrode active material layer prepared in step S40 is the positive electrode active material layer contained in the positive electrode in embodiments of this application above.

The film-forming treatment of the positive electrode slurry on the current collector in step S40 can be performed according to a conventional method for positive electrode active material layer. For example, in the embodiments, the electrode slurry can be first formed into a wet film on the current collector; then dried to volatilize the solvent, thereby drying the wet film; and then the dried film layer is rolled to form the positive electrode active material layer, so as to obtain the positive electrode.

Certainly, it may alternatively be a method for preparing the positive electrode active material layer through improving the conventional positive electrode active material layer preparation method, or a new method for preparing the positive electrode active material layer. Provided that the electrode slurry in step S30 is used to prepare the positive electrode active material layer on the current collector, it is within the scope disclosed in the specification of the embodiments of this application.

In addition, the film-forming treatment conditions in S40 can be controlled and adjusted, for example, by controlling and adjusting the conditions for forming a wet film of the positive electrode slurry prepared in step S30 on the current collector, the conditions of the rolling treatment, or the like, the related properties of the formed positive electrode active material layer can be controlled and adjusted, for example, controlling and adjusting the content of the positive electrode active material layer on one side of the current collector to the range of 250-330 mg/1540.25 $mm^2$ as above, the compacted density to the range of 2.6 to 3.2 $g/cm^3$ as above, the porosity to the range of 35% to 65% as above, the sheet resistance of the electrode plate to the range of 0.5-5 $m\Omega$ as above, or the like.

**Battery**

In a fourth aspect, embodiments of this application further provide a sodium battery.

In the embodiments, the sodium battery in embodiments of this application may include any one of a sodium battery cell, a battery module, and a battery pack.

Sodium battery cell:

The sodium battery cell, also known as a sodium cell, refers to including a battery outer package and an electrode assembly encapsulated in the battery outer package. The number of electrode assemblies contained in the battery cell may be one or more, which can be adjusted according to actual needs.

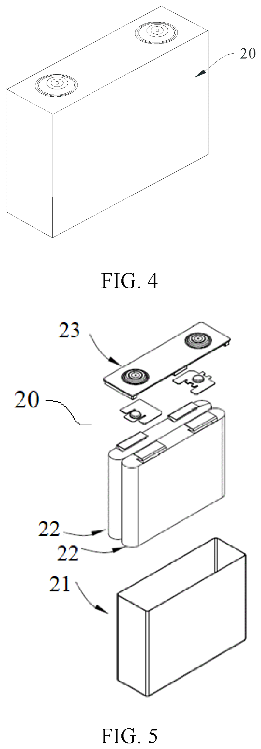

The outer package of the sodium battery cell may be a hard shell, such as a hard plastic shell, aluminum shell, steel shell, or the like; or a soft package, such as a pouch soft package. The material of the soft package may be plastic, such as polypropylene, polybutylene terephthalate, and polybutylene succinate. The shape of the outer package may be cylindrical, prismatic, or any other shape. The shape of the outer package defines the shape of the sodium battery cell, so the shape of the sodium battery cell can also be cylindrical, prismatic, or any other shape corresponding to the shape of the outer package. In exemplary embodiments, the sodium battery cell may be a prismatic structure battery cell 20 as shown in FIG. 4.

In some embodiments, as shown in FIG. 5, the outer package of the battery cell 20 may include a housing 21 and a cover plate 23. The housing 21 may include a bottom plate and side plates connected to the bottom plate, and the bottom plate and side plates enclose to form an accommodating cavity. The housing 21 has an opening communicating with the

accommodating cavity, and the cover plate 23 is used to cover the opening to close the accommodating cavity. One or more electrode assemblies 22 are encapsulated in the accommodating cavity.

In the embodiments, the sodium battery cell may be a sodium battery cell containing an electrolyte or a sodium battery cell containing a solid electrolyte.

When it is a sodium battery cell containing an electrolyte solution, the electrode assembly contained in the sodium battery cell usually includes a positive electrode, a negative electrode, and a separator. The positive electrode and the negative electrode are alternately stacked, and the separator is stacked between the positive electrode and the negative electrode to play a separating role, separating the positive electrode and the negative electrode. The positive electrode, the separator, and the negative electrode can form an electrode assembly with a stacked structure through a stacking process, or can form an electrode assembly with a wound core structure through a winding process. The electrode assembly containing the separator is placed in the outer package, the electrolyte solution is injected and the electrode assembly is wetted, and after packaging, the sodium battery cell is obtained.

When it is a sodium battery cell containing a solid electrolyte, the electrode assembly contained in the sodium battery cell usually includes a positive electrode, a negative electrode, and a solid electrolyte. The positive electrode and the negative electrode are alternately stacked, and the solid electrolyte is stacked between the positive electrode and the negative electrode to play a separating role, separating the positive electrode and the negative electrode. The electrode assembly containing the solid electrolyte is placed in the outer package, and after packaging, the sodium battery cell is obtained.

In each of the above sodium battery cells, the positive electrode contained in the electrode assembly is the positive electrode in embodiments of this application above, that is, the positive electrode active material layer contains the positive electrode material in embodiments of this application above, specifically containing the layered oxide represented by the chemical formula (I) above.

In this way, the sodium battery cell has high energy density and good cycling performance.

For example, in the embodiments, upon testing, the energy density of the sodium battery cell can reach 120-150 Wh/kg. Under conditions of 25°C and 0.33C/1C, the capacity retention rate after 1000 cycles can reach 70% to 85%. In other embodiments, the operating voltage of the sodium battery cell may be 1.5-4.0 V, and good cycling performance is maintained.

In each of the above sodium battery cells, the negative electrode contained in the electrode assembly includes a negative electrode current collector, and optionally includes a negative electrode active material layer disposed on the surface of the negative electrode current collector, and the negative electrode active material layer contains a negative electrode active material. In the embodiments, the negative electrode current collector may include but is not limited to metal or composite current collectors. For example, as the metal, sodium, sodium alloy, copper, copper alloy, nickel, nickel alloy, titanium, titanium alloy, silver, silver alloy, or the like, can be used. In the case of using sodium or sodium alloy as the negative electrode current collector, since sodium or sodium alloy itself can also serve as the negative electrode active material, the negative electrode plate can be without a negative electrode active material layer, and sodium or sodium alloy serves both as the current collector and the negative electrode active material.

The composite current collector may include a composite material of polymer material and metal, where the polymer material may include but is not limited to polypropylene (PP), polyethylene terephthalate (PET), polybutylene terephthalate (PBT), polystyrene (PS), polyethylene (PE), or the like, and the metal may include but is not limited to sodium, copper, copper alloy, nickel, nickel alloy, titanium, titanium alloy, silver, silver alloy. The composite current collector may be obtained by mixing of polymer material and metal, or may be applied onto at least one side of the polymer material by electroplating, coating, or other methods.

When the negative electrode includes a negative electrode active material layer, the negative electrode active material in the negative electrode active material layer may include but is not limited to any one or more mixtures or composite materials formed from carbon-based materials, alloy materials, titanium-based materials, and sodium metal. The carbon-based materials include but are not limited to one or more of graphite, soft carbon, hard carbon, carbon microspheres, and carbon fibers; the alloy materials include but are not limited to one or more of sodium-tin alloy, sodium-germanium alloy, and sodiumantimony alloy; the titanium-based materials include but are not limited to one or more of titanium dioxide, titanate, and titanium phosphate.

The mass content of the negative electrode active material in the negative electrode active material layer may be 85% to 98%, optionally 95% to 98%, and in exemplary embodiments, it may be typical but non-limiting contents such as 85%, 90%, 91%, 92%, 93%, 94%, 95%, 96%, 97%, 98%, or any range between two content values.

The negative electrode active material layer may further include at least one of a conductive agent and a binder. The conductive agent is used to collect current between negative electrode active materials and between the active material and the current collector, improving electronic conductivity, and the conductive agent can also promote the wetting of the electrolyte on the negative electrode plate. The binder can improve the bonding strength between the substances in the negative electrode active material layer and between the active layer and the current collector.

In the embodiments, the mass content of the conductive agent in the negative electrode active material layer may

be 0.5% to 10%, and in exemplary embodiments, it may be typical but non-limiting contents such as 0.5%, 1%, 2%, 3%, 4%, 5%, 6%, 7%, 8%, 9%, 10%, or any range between two content values, and can also be set to other contents as needed. In exemplary embodiments, the conductive agent includes one or more of acetylene black (SP), carbon nanotubes, conductive carbon black (super-P), Ketjenblack, carbon fibers, and graphene.

In the embodiments, the mass content of the binder in the negative electrode active material layer may be 0.5% to 10%, and in exemplary embodiments, it may be typical but non-limiting contents such as 0.5%, 1%, 2%, 3%, 4%, 5%, 6%, 7%, 8%, 9%, 10%, or any range between two content values, and can also be set to other contents as needed. In exemplary embodiments, the binder includes but is not limited to one or more of polyvinylidene fluoride, polyvinylidene fluoride-hexafluoropropylene copolymer, polyoxyethylene, polyimide, polytetrafluoroethylene, polybutyl acrylate, polyacrylonitrile, carboxymethyl cellulose, carboxymethyl cellulose salt, polyacrylic acid, polyacrylate, polyvinyl alcohol, sodium alginate, cyclodextrin, styrene-butadiene rubber, vinyl acetate resin, acrylic resin, and chlorinated rubber.

In the embodiments, the negative electrode active material layer may further optionally include a thickener, for example, but not limited to carboxymethyl cellulose (CMC). The mass content of the thickener in the negative electrode active layer can be set to 0.5% to 5%, and in exemplary embodiments, it may be typical but non-limiting contents such as 0.5%, 1%, 1.5%, 2%, 2.5%, 3%, 3.5%, 4%, 4.5%, 5%, or any range between two content values.

In the embodiments, when each of the above sodium battery cells contains a separator, the separator, as described above, is disposed between the positive electrode and the negative electrode to separate the positive electrode and the negative electrode. The separator can prevent electrons in the battery from passing freely and prevent short circuit due to contact between electrodes, but can allow sodium ions in the electrolyte to pass freely between the positive electrode and the negative electrode. The separator can be any known porous structure separator with electrochemical stability and mechanical stability, and in exemplary embodiments, the separator includes a single-layer or multi-layer film of at least one of glass fiber, non-woven fabric, polyethylene (PE), polypropylene (PP), and polyvinylidene fluoride (PVDF).

In the embodiments, when each of the above sodium battery cells contains a solid electrolyte, the solid electrolyte, as described above, is disposed between the positive electrode and the negative electrode to separate the positive electrode and the negative electrode. The solid electrolyte may include at least one of polymer solid electrolytes, oxide electrolytes, sulfide electrolytes, borohydride electrolytes, and composite solid electrolytes.

Battery module:

When the sodium battery in embodiments of this application is a battery module, the battery module refers to being assembled from the above sodium battery cells, that is, it can contain multiple above sodium battery cells, and the specific number can be adjusted according to the application and capacity of the battery module.

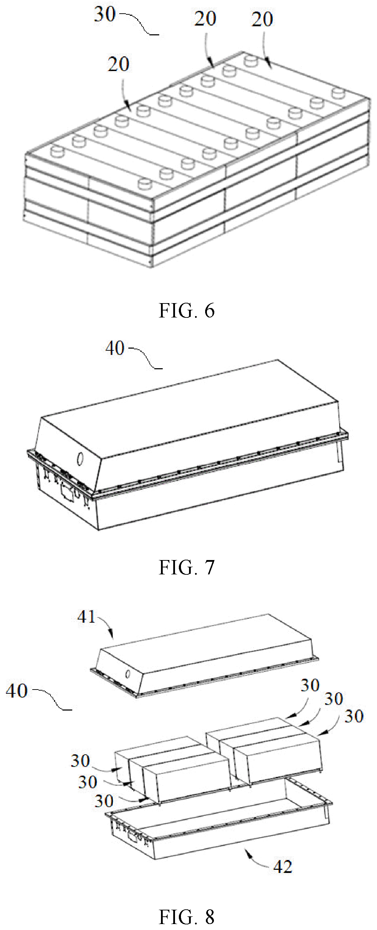

In some embodiments, FIG. 6 is a schematic diagram of a battery module 30 as an example. As shown in FIG. 6, in the battery module 30, multiple sodium battery cells 20 can be sequentially arranged along the length direction of the battery module 30. Certainly, they may alternatively be arranged in any other manner. Further, the multiple battery cells 20 can be fixed by fasteners.

Optionally, the battery module 30 can also include a housing with an accommodating space, and multiple sodium battery cells 20 are accommodated in the accommodating space.

Battery pack:

When the sodium battery in embodiments of this application is a battery pack, the battery pack refers to being assembled from the above sodium battery cells, that is, it can contain multiple sodium battery cells, and the multiple sodium battery cells are assembled into the above battery module. The specific number of battery cells or battery modules contained in the battery pack can be adjusted according to the application and capacity of the battery pack.

In some embodiments, FIGs. 7 and 8 are schematic diagrams of a battery pack 40 as an example. The battery pack 40 may include a battery box and multiple battery modules 30 disposed in the battery box. The battery box includes an upper case 41 and a lower case 42, the upper case 41 is used to cover the lower case 42, and forms a closed space for accommodating the battery modules 30. Multiple battery modules 30 can be arranged in the battery box in any manner.

## Electric apparatus

In a fifth aspect, embodiments of this application further provide an electric apparatus. The electric apparatus in embodiments of this application includes a power unit or an energy storage unit, and certainly may further include other auxiliary components or necessary components. The power unit or energy storage unit contains the sodium battery in embodiments of this application above. It can be the above sodium battery cell, battery module, or battery pack. Since the electric apparatus in embodiments of this application contains the sodium battery in embodiments of this application above, the power unit or energy storage unit of the electric apparatus in embodiments of this application has high energy

density, good cycling performance, long service life, and the electric apparatus in embodiments of this application has long standby or endurance time.

In the embodiments, the electric apparatus may include but is not limited to mobile phones, tablets, notebook computers, electric toys, electric tools, electric bicycles, electric vehicles, ships, aerospace vehicles, or the like. The electric toys may include fixed or mobile electric toys, such as game consoles, electric vehicle toys, electric ship toys, and electric airplane toys, or the like, and the aerospace vehicles may include airplanes, rockets, space shuttles, and spaceships, or the like. As the electric apparatus, the battery cell, battery module, or battery pack in the battery can be selected according to its usage needs.

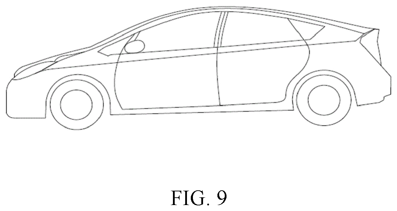

FIG. 9 is a schematic diagram of an electric apparatus as an example. The electric apparatus is a pure electric vehicle, a hybrid electric vehicle, or a plug-in hybrid electric vehicle, or the like. To meet the demand of the electric apparatus for high power and high energy density, a battery pack or a battery module can be used.

In the embodiments, when the electric apparatus includes an energy storage unit, the electric apparatus may be an energy storage device, and the energy storage device includes an energy storage unit, and certainly may further include other auxiliary components or necessary components. The energy storage unit contains the battery in the embodiments of this application described above. The battery contained in the energy storage unit can be one or more. When there are multiple, the multiple batteries can form a battery module or a battery pack. Since the energy storage device in the embodiments of this application contains the battery in the embodiments of this application described above, the energy storage device has high energy density, good cycling performance, long service life, and further high energy density.

## Examples

The following describes the examples of this application. The examples described below are exemplary and are only used to explain this application, and should not be understood as limiting this application. For specific techniques or conditions not specified in the examples, the techniques or conditions described in the literature in the field or according to the product instructions are followed. Reagents or instruments used without specifying the manufacturer are all conventional products that can be obtained commercially.

1. Examples of positive electrode material and preparation method therefor

### Example A1

This example provides a positive electrode material and a preparation method therefor. The positive electrode material includes a layered oxide having the molecular formula $Na_{0.92}Ni_{0.15}Fe_{0.34}Mn_{0.45}O_2$.

The preparation method for the positive electrode material includes the following steps:

S1: NiO, $Mn_2O_3$, and $Fe_2O_3$ were ball-milled at a speed of 500 rpm for 3 hours based on the molar ratio of metal elements contained in $Na_{0.92}Ni_{0.15}Fe_{0.34}Mn_{0.45}O_2$, and then sodium carbonate was added in proportion for mixing to obtain the precursor; and

S2: the precursor was sintered in a muffle furnace, pulverized to obtain the layered oxide $Na_{0.92}Ni_{0.15}Fe_{0.34}Mn_{0.45}O_2$; where the sintering conditions were: temperature: 850°C; time: 5 h; heating rate: 5°C/min; oxygen atmosphere.

### Example A2

This example provides a positive electrode material and a preparation method therefor. The positive electrode material includes a layered oxide having the molecular formula $Na_{0.92}Ni_{0.15}Fe_{0.41}Mn_{0.44}O_2$.

The preparation method for the positive electrode material includes the following steps:

S1: NiO, $Mn_2O_3$, and $Fe_2O_3$ were ball-milled at a speed of 500 rpm for 3 hours based on the molar ratio of metal elements contained in $Na_{0.92}Ni_{0.15}Fe_{0.41}Mn_{0.44}O_2$, and then sodium carbonate was added in proportion for mixing to obtain the precursor; and

S2: the precursor was sintered in a muffle furnace, pulverized to obtain the layered oxide $Na_{0.92}Ni_{0.15}Fe_{0.41}Mn_{0.44}O_2$; where the sintering conditions were: temperature: 850°C; time: 5 h; heating rate: 5°C/min; oxygen atmosphere.

### Example A3

This example provides a positive electrode material and a preparation method therefor. The positive electrode material includes a layered oxide having the molecular formula $Na_{0.92}Ni_{0.05}Fe_{0.5}Mn_{0.45}O_2$.

The preparation method for the positive electrode material includes the following steps:

S1: NiO, $Mn_2O_3$, and $Fe_2O_3$ were ball-milled at a speed of 500 rpm for 3 hours based on the molar ratio of metal elements contained in $Na_{0.92}Ni_{0.05}Fe_{0.5}Mn_{0.45}O_2$, and then sodium carbonate was added in proportion for mixing to obtain the precursor; and

S2: the precursor was sintered in a muffle furnace, pulverized to obtain the layered oxide $Na_{0.92}Ni_{0.05}Fe_{0.5}Mn_{0.45}O_2$; where the sintering conditions were: temperature: 850°C; time: 5 h; heating rate: 5°C/min; oxygen atmosphere.

### Example A4

This example provides a positive electrode material and a preparation method therefor. The positive electrode material includes a layered oxide having the molecular formula $Na_{0.92}Fe_{0.38}Mn_{0.6}O_2$.

The preparation method for the positive electrode material includes the following steps:

S1: $Mn_2O_3$ and $Fe_2O_3$ were ball-milled at a speed of 500 rpm for 3 hours based on the molar ratio of metal elements contained in $Na_{0.92}Fe_{0.38}Mn_{0.6}O_2$, and then sodium carbonate was added in proportion for mixing to obtain the precursor; and

S2: the precursor was sintered in a muffle furnace, pulverized to obtain the layered oxide $Na_{0.92}Fe_{0.38}Mn_{0.6}O_2$; where the sintering conditions were: temperature: 850°C; time: 5 h; heating rate: 5°C/min; oxygen atmosphere.

### Example A5

This example provides a positive electrode material and a preparation method therefor. The positive electrode material includes a layered oxide having the molecular formula $Na_{0.92}Ni_{0.1}Fe_{0.38}Mn_{0.437}Zn_{0.082}O_2$.

The preparation method for the positive electrode material includes the following steps:

S1: NiO, $Mn_2O_3$, $Fe_2O_3$, and ZnO were ball-milled at a speed of 500 rpm for 3 hours based on the molar ratio of metal elements contained in $Na_{0.92}Ni_{0.1}Fe_{0.38}Mn_{0.437}Zn_{0.082}O_2$, and then sodium carbonate was added in proportion for mixing to obtain the precursor; and

S2: the precursor was sintered in a muffle furnace, pulverized to obtain the layered oxide $Na_{0.92}Ni_{0.1}Fe_{0.38}Mn_{0.437}Zn_{0.082}O_2$; where the sintering conditions were: temperature: 850°C; time: 5 h; heating rate: 5°C/min; oxygen atmosphere.

### Example A6

This example provides a positive electrode material and a preparation method therefor. The positive electrode material includes a layered oxide having the molecular formula $Na_{0.92}Ni_{0.1}Fe_{0.38}Mn_{0.367}Zn_{0.082}O_2$.

The preparation method for the positive electrode material includes the following steps:

S1: NiO, $Mn_2O_3$, $Fe_2O_3$, and $ZnO_2$ were ball-milled at a speed of 500 rpm for 3 hours based on the molar ratio of metal elements contained in $Na_{0.92}Ni_{0.1}Fe_{0.38}Mn_{0.367}Zn_{0.082}O_2$, and then sodium carbonate was added in proportion for mixing to obtain the precursor; and

S2: the precursor was sintered in a muffle furnace, pulverized to obtain the layered oxide $Na_{0.92}Ni_{0.1}Fe_{0.38}Mn_{0.367}Zn_{0.082}O_2$; where the sintering conditions were: temperature: 850°C; time: 5 h; heating rate: 5°C/min; oxygen atmosphere.

### Example A7

This example provides a positive electrode material and a preparation method therefor. The positive electrode material includes a layered oxide having the molecular formula $Na_{0.92}Ni_{0.1}Fe_{0.494}Mn_{0.395}O_2$.

The preparation method for the positive electrode material includes the following steps:

S1: NiO, $Mn_2O_3$, and $Fe_2O_3$ were ball-milled at a speed of 500 rpm for 3 hours based on the molar ratio of metal elements contained in $Na_{0.92}Ni_{0.1}Fe_{0.494}Mn_{0.395}O_2$, and then sodium carbonate was added in proportion for mixing to obtain the precursor; and

S2: the precursor was sintered in a muffle furnace, pulverized to obtain the layered oxide $Na_{0.92}Ni_{0.1}Fe_{0.494}Mn_{0.395}O_2$; where the sintering conditions were: temperature: 850°C; time: 5 h; heating rate: 5°C/min; oxygen atmosphere.

**Example A8**

This example provides a positive electrode material and a preparation method therefor. The positive electrode material includes a layered oxide having the molecular formula $Na_{0.85}Ni_{0.1}Fe_{0.38}Mn_{0.437}Al_{0.082}O_2$.

The preparation method for the positive electrode material includes the following steps:

S1: NiO, $Mn_2O_3$, $Fe_2O_3$, and $Al_2O_3$ were ball-milled at a speed of 500 rpm for 3 hours based on the molar ratio of metal elements contained in $Na_{0.85}Ni_{0.1}Fe_{0.38}Mn_{0.437}Al_{0.082}O_2$, and then sodium carbonate was added in proportion for mixing to obtain the precursor; and

S2: the precursor was sintered in a muffle furnace, pulverized to obtain the layered oxide $Na_{0.85}Ni_{0.1}Fe_{0.38}Mn_{0.437}Al_{0.082}O_2$; where the sintering conditions were: temperature: 850°C; time: 5 h; heating rate: 5°C/min; oxygen atmosphere.

**Example A9**

This example provides a positive electrode material and a preparation method therefor. The positive electrode material includes a layered oxide having the molecular formula $Na_{0.85}Ni_{0.1}Fe_{0.38}Mn_{0.437}Mg_{0.082}O_2$.

The preparation method for the positive electrode material includes the following steps:

S1: NiO, $Mn_2O_3$, $Fe_2O_3$, and MgO were ball-milled at a speed of 500 rpm for 3 hours based on the molar ratio of metal elements contained in $Na_{0.85}Ni_{0.1}Fe_{0.38}Mn_{0.437}Mg_{0.082}O_2$, and then sodium carbonate was added in proportion for mixing to obtain the precursor; and

S2: the precursor was sintered in a muffle furnace, pulverized to obtain the layered oxide $Na_{0.85}Ni_{0.1}Fe_{0.38}Mn_{0.437}Mg_{0.082}O_2$; where the sintering conditions were: temperature: 850°C; time: 5 h; heating rate: 5°C/min; oxygen atmosphere.

**Comparative Example A1**

This example provides a positive electrode material and a preparation method therefor. The positive electrode material includes a layered oxide having the molecular formula $Na_{0.92}Ni_{0.05}Fe_{0.22}Mn_{0.632}O_2$.

The preparation method for the positive electrode material includes the following steps:

S1: NiO, $Mn_2O_3$, and $Fe_2O_3$ were ball-milled at a speed of 500 rpm for 3 hours based on the molar ratio of metal elements contained in $Na_{0.92}Ni_{0.05}Fe_{0.22}Mn_{0.632}O_2$, and then sodium carbonate was added in proportion for mixing to obtain the precursor; and

S2: the precursor was sintered in a muffle furnace, pulverized to obtain the layered oxide $Na_{0.92}Ni_{0.05}Fe_{0.22}Mn_{0.632}O_2$; where the sintering conditions were: temperature: 850°C; time: 5 h; heating rate: 5°C/min; oxygen atmosphere.

**Comparative Example A2**

This example provides a positive electrode material and a preparation method therefor. The positive electrode material includes a layered oxide having the molecular formula $Na_{0.92}Ni_{0.05}Fe_{0.75}Mn_{0.2}O_2$.

The preparation method for the positive electrode material includes the following steps:

S1: NiO, $Mn_2O_3$, and $Fe_2O_3$ were ball-milled at a speed of 500 rpm for 3 hours based on the molar ratio of metal elements contained in $Na_{0.92}Ni_{0.05}Fe_{0.75}Mn_{0.2}O_2$, and then sodium carbonate was added in proportion for mixing to obtain the precursor; and

S2: the precursor was sintered in a muffle furnace, pulverized to obtain the layered oxide $Na_{0.92}Ni_{0.05}Fe_{0.75}Mn_{0.2}O_2$; where the sintering conditions were: temperature: 850°C; time: 5 h; heating rate: 5°C/min; oxygen atmosphere.

**Comparative Example A3**

This example provides a positive electrode material and a preparation method therefor. The positive electrode material includes a layered oxide having the molecular formula $Na_{0.85}Ni_{0.1}Fe_{0.24}Mn_{0.65}O_2$.

The preparation method for the positive electrode material includes the following steps:

S1: NiO, $Mn_2O_3$, and $Fe_2O_3$ were ball-milled at a speed of 500 rpm for 3 hours based on the molar ratio of metal

elements contained in $Na_{0.85}Ni_{0.1}Fe_{0.24}Mn_{0.65}O_2$, and then sodium carbonate was added in proportion for mixing to obtain the precursor; and

S2: the precursor was sintered in a muffle furnace, pulverized to obtain the layered oxide $Na_{0.85}Ni_{0.1}Fe_{0.24}Mn_{0.65}O_2$; where the sintering conditions were: temperature: 850°C; time: 5 h; heating rate: 5°C/min; oxygen atmosphere.

2. Examples of positive electrode and sodium-ion battery cell

**Examples B1 to B9**

Examples B1 to B9 each provide a sodium-ion battery cell, and each sodium-ion battery cell includes an electrode assembly formed by a positive electrode plate, a separator, and a negative electrode plate, and further includes an electrolyte.

The sodium-ion battery cells in Examples B1 to B9 were assembled as follows:

Positive electrode plate: Sodium-ion positive electrode active material, conductive agent carbon nanotubes, conductive agent carbon black, and binder polyvinylidene fluoride (PVDF) were fully stirred and mixed in an appropriate amount of solvent NMP in a weight ratio of 95:0.5:2:2.5 to form a uniform positive electrode slurry; the positive electrode slurry was uniformly applied onto the surface of a 13 μm positive electrode current collector aluminum foil, dried and cold-pressed to obtain the positive electrode plate; where the sodium-ion positive electrode active materials were the positive electrode materials in Examples A1 to A9 described above, respectively.

Negative electrode plate: Hard carbon, conductive agent SP, and CMC binder were added to deionized water in a weight ratio of 8:1:1, fully stirred and mixed to form a uniform negative electrode slurry; the negative electrode slurry was uniformly applied onto the surface of a 6 μm copper foil, dried and cold-pressed to obtain the negative electrode plate.

Electrolyte: In an environment with a water content of less than 10 ppm, nonaqueous organic solvents ethylene carbonate EC and diethyl carbonate DMC were mixed in a volume ratio of 1:1 to obtain an electrolyte solvent, and then sodium hexafluorophosphate and the mixed solvent were mixed to prepare an electrolyte with a sodium salt concentration of 1 mol/L.

Separator: A porous polyethylene (PE) membrane was used as the separator.

Battery assembly: The positive electrode plate, separator, and negative electrode plate described above were stacked in order, with the separator placed between the positive electrode plate and the negative electrode plate to serve as a separation function, and an electrode assembly was obtained through a stacking process. Each electrode assembly was placed in an outer package, dried, and then the electrolyte was injected. After vacuum packaging, standing, formation, shaping, and other processes, the sodium-ion battery cells in Examples B1 to B9 were obtained, respectively. The sodium-ion positive electrode active material contained in Example B1 was the positive electrode material in Example A1 described above, the sodium-ion positive electrode active material contained in Example B2 was the positive electrode material in Example A2 described above, and so on, and the sodium-ion positive electrode active material contained in Example B9 was the positive electrode material in Example A9 described above.

**Examples B10 to B15**

Examples B10 to B15 each provide a sodium-ion battery cell, and each sodium-ion battery cell includes an electrode assembly formed by a positive electrode plate, a separator, and an negative electrode plate, and further includes an electrolyte.

The sodium-ion battery cells in Examples B10 to B15 were all prepared by referring to the sodium-ion battery cell in Example B1, with the difference that:

In the sodium-ion battery cells of Examples B10 to B12, the content (CW) of the positive electrode active material layer contained in the positive electrode plate of each sodium-ion battery cell on one side of the current collector was controlled as shown in Table 2.

In the sodium-ion battery cells of Examples B13 to B14, the electrode plate compacted density of the positive electrode plate of each sodium-ion battery cell was controlled as shown in Table 2.

In the sodium-ion battery cell of Example B15, the carbon nanotubes contained in the positive electrode plate of the sodium-ion battery cell were replaced with carbon fibers, and the content thereof was controlled to 2%, as shown in Table 2. The total content of the conductive agent contained in the positive electrode plate of Example B15 was the same as the total content of the conductive agent contained in the positive electrode plate of Example B1.

**Comparative Examples B1 to B3**

Comparative Examples B1 to B3 each provide a sodium-ion battery cell, and each sodium-ion battery cell includes an electrode assembly formed by a positive electrode plate, a separator, and a negative electrode plate, and

further includes an electrolyte.

The sodium-ion battery cells in Comparative Examples B1 to B3 were all prepared by referring to the sodium-ion battery cell in Example B1. The difference is that:

In the sodium-ion battery cells of Comparative Examples B1 to B3, the sodium-ion positive electrode active materials contained in the positive electrode plate of the sodium-ion battery cell were the positive electrode materials in Comparative Example A1, Comparative Example A2, and Comparative Example A3, respectively. Specifically, the sodium-ion positive electrode active material contained in Comparative Example B1 was the positive electrode material in Comparative Example A1, the sodium-ion positive electrode active material contained in Comparative Example B2 was the positive electrode material in Comparative Example A2, and the sodium-ion positive electrode active material contained in Comparative Example B3 was the positive electrode material in Comparative Example A3.

2. Related performance testing of layered oxides and sodium-ion battery cells in each example:

2.1 Characterization and related performance testing of layered oxides in each example:

The layered oxides provided in Examples A1 to A9 and Comparative Examples A1 to A3 described above were respectively subjected to the related feature testing in Table 1 below according to the following methods, and the test results are shown in Table 1:

Layered oxide element content testing method: Inductively coupled plasma emission spectroscopy (ICP) was obtained using Agilent ICP-OES730, and then the content of each metal element was calculated from the ICP results, thereby calculating the mass content ratio of each component.

Single crystal morphology testing method: The layered oxides provided in the examples were subjected to scanning electron microscopy (SEM) using the scanning electron microscopy measurement method for lengths in the micrometer range according to GB/T 16594-1996. In addition, based on the SEM photographs, single crystal length, width, and height dimension data could be obtained. The electron microscope image of the layered oxide provided in Example A3 is shown in FIG. 1.

Crystal phase characterization method: An XRD diffractometer was used to analyze the layered oxide at a scanning speed of 0.5°C/min.

$D_v50$ testing method: The layered oxides were tested according to the method steps in GB/T 16418.

BET specific surface area testing method: The specific surface area of each layered oxide was tested according to the method steps in GB/T 19587-2017.

Powder compacted density (compacted density) testing method:

Testing was performed by referring to the testing method in the GB/T 24533-2019 standard, specifically referring to the following testing steps:

(1) the upper and lower gaskets, top column, and metal cylindrical sleeve of the compacted density instrument were wiped with a clean soft cloth (tissue), and if necessary, wiped with a soft cloth dipped in anhydrous ethanol and air-dried;

(2) after placing the gasket, top column, metal cylindrical sleeve, and pad in order during the test, they were placed on a digital thickness gauge, and the zero key was pressed;

(3) the top column and upper gasket were removed, 1 g of sample was weighed into the sleeve, accurate to 0.0001 g, and the weight was recorded as m;

(4) the gasket and top column were slowly slid down from the hole respectively, installed on the compacted density instrument together with the pad, and the pressure control knob was tightened;

(5) the pressure bar was shaken, and In addition, the value on the digital pressure gauge of the compacted density instrument was observed. After reaching the specified value of 2200 lb, the stopwatch was started; after 30s, the pressure control knob was loosened, the pressure was removed, the pad dropped to a certain height, and the pressure control knob was tightened again; and

(6) the top column, sleeve, and bottom piece were taken out together with the pad, placed on the digital thickness gauge, and the value on the digital thickness gauge was read within 10 s, recorded as H.

$$r=10m/(S\times H).$$

The powder compacted density r of the sample was then calculated according to the formula $r=10m/(S\times H)$ above.

mm is the sample weight, in grams (g); HH is the thickness after sample compaction, in millimeters (mm); and SS is the cross-sectional area of the top column, in square centimeters ($cm^2$).

Charging/discharging gram capacity and first-cycle efficiency testing method: Tested according to the layered

oxide testing method in the examples of this application described above.

2.2 Related performance testing of sodium-ion battery cells and the positive electrode plates contained therein in each example:

The sodium-ion battery cells and the positive electrode plates contained therein provided in Examples B1 to B15 and Comparative Examples B1 to B3 described above were respectively subjected to the related performance testing in Table 2 below according to the following methods, and the test results are shown in Table 2:

CW testing method: The electrode plate was punched into an electrode plate of 1540.25 $mm^2$ through a punching machine, and weighed minus the aluminum foil weight.

Positive electrode plate compacted density testing method: For the positive electrode plate compacted density, specifically refer to the testing method for the first discharging gram capacity and first charge-discharge efficiency of lithium manganate as a lithium-ion battery positive electrode material. For details, see GB/T 39864-2021 standard or GB/T 42161-2022. Specifically, refer to the following testing steps with parameters:

A battery electrode plate meeting the processing requirements was obtained, a positive electrode plate with a diameter of 14 mm was punched out using a punching machine, and the mass $m_c$ and thickness $d_c$ of the positive electrode plate were measured using an electronic balance and a desktop digital thickness gauge; a sufficient number of aluminum foil substrate sheets with a diameter of 14 mm were punched out using a punching machine, and the mass $m_{Al}$ and thickness $d_{Al}$ of the aluminum foil substrate sheets were measured using an electronic balance and a desktop digital thickness gauge; and the positive electrode plate compacted density was calculated according to the following formula:

positive electrode plate compacted density $\rho_c = (m_c - m_{Al}) \times 10^6 \div [\pi (\varphi/2) \times (d_c - d_{Al})]$;

where

$\rho c$ is the positive electrode plate compacted density, in grams per cubic centimeter ($g/cm^3$);
$m_c$ is mass of the positive electrode plate, in grams (g);
$m_{Al}$ is mass of the aluminum foil substrate sheet, in grams (g);
$\varphi$ is diameter of the positive electrode plate, in millimeters (mm);
$d_c$ is thickness of the positive electrode plate, in micrometers ($\mu$m); and
$d_{Al}$ is thickness of the aluminum foil substrate sheet, in micrometers ($\mu$m).

Electrode plate porosity testing method: Testing was performed by using a gas displacement method, specifically referring to GB/T 24586-2009. The specific steps of the electrode plate porosity testing method: The electrode plate was immersed in methyl ethyl carbonate (EMC) for cleaning, and then the specific equipment specified in GB/T 24586-2009 was used to measure by gas displacement method; where the percentage of the pore volume in the electrode plate to the total volume of the electrode plate is the electrode plate porosity, and the calculation formula: Porosity = $(V - V0)/V \times 100\%$, where V0 is the true volume and V is the apparent volume.

Sheet resistance testing method: Testing was performed by referring to the method in GB/T 30835-2014 or T/CASAS 019-2021. For the testing instrument verification procedure, refer to the method in JJG 508-2004. Specifically, the four-probe method was used for testing: The electrode plate was immersed in methyl ethyl carbonate (EMC) for cleaning, and the specific equipment specified in GB/T 30835-2014 or T/CASAS 019-2021 was used. Four copper plates of 1.5 cm long × 1 cm wide × 2 mm thick were fixed equidistantly in a line, with the distance between the middle two copper plates being L (1 cm to 2 cm), and the substrate for fixing the copper plates was an insulating material. During testing, the lower end faces of the four copper plates were pressed on the electrode plate to be tested, the two end copper plates were connected to a DC current I, the voltage V was measured on the middle two copper plates, three I and V values were read, the average values of I and V were taken, and V/I was the electrode plate resistance at the test site.

Related performance testing method of sodium-ion battery cell:

Cycling retention rate (%): At 25°C, the secondary battery was constant current charged at 0.33C to 3.85 V, then constant voltage charged at 3.85 V to a current of 0.05C, and then constant current discharged at 1C to 1.5 V, which was one charge-discharge cycle. With the first discharge capacity as 100%, the capacity retention rate after 500 cycles of the battery was calculated. Capacity retention rate (%) after 1000 cycles of the battery = Discharge capacity of the 1000th cycle/First discharge capacity × 100%.

Energy density: Each battery cell was charged at 0.33C at room temperature to a voltage of 4.2 V, then discharged at 0.33C to a voltage of 2.0 V, and the discharge energy S0 was measured. Then the mass M of the battery cell corresponding to S0 was measured, and the battery cell energy density (mass energy density) was calculated according to the formula S0/M.

**Table 1**

| Example | Layered oxide formula | (Ni+Mn+Fe+M):Na | (Mn+M):Fe | Crystal phase | $D_v50$ μm | Powder compacted density g/cm$^3$ | Charging/discharging gram capacity mAh/g |
|---|---|---|---|---|---|---|---|
| Example A1 | Na0.92Ni0.15Fe0.34Mn0.45O2 | 0.94: 0.92 | 1.32 | O3 | 4.8 | 2T 2.97<br>3T 3.35 | 145/136 |
| Example A2 | Na0.92Ni0.15Fe0.41Mn0.44O2 | 1: 0.92 | 1.07 | O3 | 5.5 | 2T 2.95<br>3T 3.32 | 148/138 |
| Example A3 | Na0.92Ni0.05Fe0.5Mn0.45O2 | 1: 0.92 | 0.90 | O3 | 7.3 | 2T 2.9<br>3T 3.35 | 147/137 |
| Example A4 | Na0.92Fe0.38Mn0.6O2 | 0.98: 0.92 | 1.58 | O3 | 6.8 | 2T 2.93<br>3T 3.24 | 143/131 |
| Example A5 | Na0.92Ni0.1Fe0.38Mn0.437Zn0.082O2 | 0.999: 0.92 | 1.37 | O3 | 5.4 | 2T 2.90<br>3T 3.24 | 145/135 |
| Example A6 | Na0.92Ni0.1Fe0.38Mn0.367Zn0.082O2 | 0.929: 0.92 | 1.18 | O3 | 7 | 2T 2.93<br>3T 3.24 | 147/136 |
| Example A7 | Na0.92Ni0.1Fe0.494Mn0.395O2 | 0.989:0.92 | 0.80 | O3 | 6.7 | 2T 2.82<br>3T 3.10 | 145/134 |
| Example A8 | Na0.85Ni0.1Fe0.38Mn0.437Al0.082O2 | 0.999:0.85 | 1.37 | O3 | 5.5 | 2T 2.93<br>3T 3.26 | 145/134 |
| Example A9 | Na0.81Ni0.2Fe0.28Mn0.437Mg0.082O2 | 0.999:0.81 | 1.37 | O3 | 5.6 | 2T 2.93<br>3T 3.22 | 146/137 |
| Comparative Example A1 | Na0.92Ni0.05Fe0.22Mn0.632O2 | 0.952:0.92 | 2.87 | O3 | 4.7 | 2T 2.87<br>3T 3.13 | 135/123 |
| Comparative Example A2 | Na0.92Ni0.05Fe0.75Mn0.2O2 | 1:0.92 | 0.27 | O3 | 5 | 2T 2.84<br>3T 3.11 | 142/134 |
| Comparative Example A3 | Na0.92Ni0.1Fe0.24Mn0.65O2 | 0.99:0.92 | 2.7 | O3 | 6 | 2T 2.9<br>3T 3.12 | 135/124 |

T in the powder compacted density indicates tons, for example, 2T is a pressure of 2 tons, and the corresponding compacted density indicates the compacted density under a pressure of 2 tons; 3T is a pressure of 3 tons, and the corresponding compacted density indicates the compacted density under a pressure of 3 tons.

**Table 2**

| Example | CW mg/1540.25 $mm^2$ | Electrode plate compacted density $g/cm^3$ | Type and content of linear conductive agent | Cell energy density Wh/kg | Cycling retention rate % |
|---|---|---|---|---|---|
| Example B1 | 310 | 3 | Carbon nanotube content: 0.5% | 139 | 87 |
| Example B2 | 310 | 3 | Carbon nanotube content: 0.5% | 143 | 84 |
| Example B3 | 310 | 3 | Carbon nanotube content: 0.5% | 145 | 83 |
| Example B4 | 310 | 3 | Carbon nanotube content: 0.5% | 133 | 85 |
| Example B5 | 310 | 3 | Carbon nanotube content: 0.5% | 140 | 84 |
| Example B6 | 310 | 3 | Carbon nanotube content: 0.5% | 143 | 83 |
| Example B7 | 310 | 3 | Carbon nanotube content: 0.5% | 142 | 80 |
| Example B8 | 310 | 3 | Carbon nanotube content: 0.5% | 137 | 86 |
| Example B9 | 310 | 3 | Carbon nanotube content: 0.5% | 139 | 86 |
| Example B10 | 250 | 3 | Carbon nanotube content: 0.5% | 125 | 87 |
| Example B11 | 290 | 3 | Carbon nanotube content: 0.5% | 134 | 86 |
| Example B12 | 330 | 3 | Carbon nanotube content: 0.5% | 143 | 84 |
| Example B13 | 310 | 2.6 | Carbon nanotube content: 0.5% | 133 | 87 |
| Example B14 | 310 | 3.2 | Carbon nanotube content: 0.5% | 143 | 86 |
| Example B15 | 310 | 3 | Carbon fiber content: 3% | 139 | 87 |
| Comparative Example B1 | 310 | 3 | Carbon nanotube content: 0.5% | 120 | 78 |
| Comparative Example B2 | 310 | 3 | Carbon nanotube content: 0.5% | 129 | 65 |
| Comparative Example B3 | 310 | 3 | Carbon nanotube content: 0.5% | 123 | 75 |

From the above Table 1, it can be seen that the crystal phase of the layered oxides with low nickel and high iron content provided in Examples A1 to A9 is O3. Further testing shows that the specific surface areas of particles of the layered oxides provided in Examples A1 to A9 are within the range of 0.4-1.5 $m^2/g$, further 0.5-0.95 $m^2/g$. Compared with the charge/discharge specific capacities of the layered oxides in Comparative Example A1 and Comparative Example A3, those in Examples A1 to A9 are significantly improved.

With reference to Table 1 and Table 2, from the comparison between Examples A1/B1 to A3/B3 and Comparative Examples A1/B1 to A2/B2, it can be seen that controlling the iron element content in the layered oxide represented by chemical formula (I) within an appropriate range is beneficial for improving the gram capacity of the oxide material and the energy density and cycling retention rate of the corresponding sodium-ion battery cell. When the content c of the iron

element in the layered oxide represented by chemical formula (I) is lower than 0.25, for example as low as 0.22 in Comparative Example A1, the gram capacity of the layered oxide material is significantly lower compared to when c is higher than 0.25, and the cycling retention rate and energy density of the corresponding sodium-ion battery cell are also significantly reduced. When the content c of the iron element in the layered oxide represented by chemical formula (I) is higher than 0.5, for example, increased to 0.75 in Comparative Example A2, the gram capacity of the oxide material is also significantly lower compared to when c is lower than 0.5, and the cycling retention rate and energy density of the corresponding sodium-ion battery cell are significantly reduced.

With reference to Table 1 and Table 2, from the comparison between Examples A5/B5 to A6/B6 and Comparative Examples A2/B2 to A3/B3, it can be seen that controlling the content of the manganese element in the layered oxide represented by chemical formula (I) within an appropriate range is beneficial for improving the gram capacity of the oxide material and the energy density and cycling retention rate of the corresponding sodium-ion battery cell. When the content d of the manganese element in chemical formula (I) is higher than 0.6, for example, increased to 0.65 in Comparative Example A3, the gram capacity of the oxide material is significantly reduced, and the energy density and cycling retention rate of the corresponding sodium-ion battery cell are also significantly reduced. When the content d of the manganese element in chemical formula (I) is higher than 0.26, for example as low as 0.22 in Comparative Example A2, the cycling retention rate of the corresponding sodium-ion battery cell is significantly reduced.

With reference to Table 1 and Table 2, from the comparison between Examples A1/B1 to A7/B7, it can be seen that the stoichiometric ratio of the total amount of the Mn element and the doping metal element represented by M to the amount of the Fe element in the layered oxide represented by chemical formula (I) needs to satisfy an appropriate range, for example, between 0.9 and 1.5:1, so that the gram capacity of the layered oxide represented by chemical formula (I) is improved, and the comprehensive performance of the energy density and cycling performance of the corresponding battery cell can be improved. Moreover, when between 0.9 and 1.5:1, as the ratio increases, the cycling retention rate of the cell shows a certain increasing trend, but when the ratio increases to about 1.37, the increasing trend of the cell's cycling retention rate slows down, and the cell's energy density also decreases; continuing to increase to 1.58, the cell's cycling retention rate and energy density decrease. Further comparing Examples A3/B3 with Examples A7/B7 shows that when the stoichiometric ratio of the total amount of the Mn element and the doping metal element represented by M to the amount of the Fe element in the layered oxide represented by chemical formula (I) is less than 0.9:1, for example, 0.8:1 in Example A7, the gram capacity of the layered oxide decreases, and the energy density and cycling performance of the corresponding battery cell also decrease, especially the cycling performance decreases significantly. Further comparing Examples A4/B4 with Examples A5/B5 shows that when the stoichiometric ratio of the total amount of the Mn element and the doping metal element to the amount of the Fe element in the layered oxide represented by chemical formula (I) is too high, for example, 1.58:1 in Example A4, the gram capacity of the layered oxide represented by chemical formula (I) decreases, and the energy density and cycling performance of the corresponding battery cell also decrease, especially the energy density decreases significantly. Therefore, on the basis of adjusting the stoichiometric amounts of the iron element and the manganese element in the layered oxide represented by chemical formula (I), further adjusting the stoichiometric ratio of the total amount of the Mn element and the doping metal element to the amount of the Fe element can improve the structural stability of the layered oxide represented by chemical formula (I) and improve the utilization of gram capacity.

With reference to Table 1 and Table 2, from the comparison between Examples A5/B5 and Examples A8/B8 to A9/B9, it can be seen that when the layered oxide represented by chemical formula (I) is doped with the doping metal element represented by M, the type thereof also has a certain influence on the gram capacity and structural stability of the layered oxide. Specifically, when M is an active metal element such as zinc compared to an inert metal element such as aluminum, the gram capacity of the layered oxide is improved; the energy density of the battery cell containing the active metal doping is also improved compared to that containing the inert metal doping. Therefore, the doping metal element represented by M participates in the disordered arrangement of metal elements in the transition metal layer contained in the layered oxide, which can contribute to the utilization of gram capacity and/or structural stability of the layered oxide, and correspondingly contribute to the energy density or cycling performance of the battery cell.

Finally, it should be noted that the above embodiments are only used to illustrate the technical solutions of this application and are not intended to limit them; although this application has been described in detail with reference to the foregoing embodiments, those of ordinary skill in the art should understand that modifications can still be made to the technical solutions recorded in the foregoing embodiments, or equivalent substitutions can be made to some or all of the technical features therein; these modifications or substitutions do not make the essence of the corresponding technical solutions depart from the scope of the technical solutions of the embodiments of this application, and they should all be covered within the scope of the claims and specification of this application. In particular, as long as there is no structural conflict, the technical features mentioned in the various embodiments can be combined in any manner. This application is not limited to the specific embodiments disclosed herein, but includes all technical solutions falling within the scope of the claims.

## Claims

**1.** A positive electrode material, comprising a layered oxide represented by the following chemical formula:

$Na_aNi_bFe_cMn_dM_eO_f$;

wherein 0.8≤a≤1, 0≤b≤0.2, 0.25≤c≤0.5, 0.26≤d≤0.6, 0≤e≤0.1, 1.8≤f≤2, b+c+d+e≤1, and M is an active and/or inert doping metal element.

**2.** The positive electrode material according to claim 1, wherein at least one of the a, the b, the c, the d, and the e is within the following value range:
0.85≤a≤1, 0≤b≤0.18, 0.3≤c≤0.5, 0.3≤d≤0.6, and 0.02≤e≤0.1.

**3.** The positive electrode material according to claim 1 or 2, wherein a ratio of the total stoichiometric amount of the Ni element, the Mn element, the Fe element, and the doping metal element to the stoichiometric amount of the Na element is 1:(0.85-0.95); and/or
e>0, and a ratio of the total stoichiometric amount of the Mn element and the doping metal element to the stoichiometric amount of the Fe element is 0.9-1.5:1.

**4.** The positive electrode material according to claim 1 or 2, wherein a ratio of the total stoichiometric amount of the Mn element, the Fe element, and the doping metal element to the stoichiometric amount of the Na element is 1:(0.86-0.94) and/or
e>0, and a ratio of the total stoichiometric amount of the Mn element and the doping metal element to the stoichiometric amount of the Fe element is 1-1.2:1.

**5.** The positive electrode material according to any one of claims 1 to 4, wherein the doping metal element comprises at least one of Zn, V, Cr, Al, Sc, Sn, Sb, Zr, Nb, Ti, Mg, Cu, Ru, and Ir.

**6.** The positive electrode material according to any one of claims 1 to 5, wherein the layered oxide comprises at least one of $Na_{0.87}Ni_{0.2}Fe_{0.3}Mn_{0.45}O_2$, $Na_{0.87}Ni_{0.2}Fe_{0.35}Mn_{0.45}O_2$, $Na_{0.85}Ni_{0.1}Fe_{0.387}Mn_{0.43}O_2$, $Na_{0.85}Ni_{0.05}Fe_{0.45}Mn_{0.45}O_2$, $Na_{0.87}Ni_{0.05}Fe_{0.5}Mn_{0.45}O_2$, Na0.85Ni0.1Fe0.38Mn0.437Zn0.082O2, Na0.85Ni0.1Fe0.38Mn0.437V0.082O2, Na0.85Ni0.1Fe0.38Mn0.437Cr0.082O2, $Na_{0.85}Ni_{0.1}Fe_{0.38}Mn_{0.437}Al_{0.082}O_2$, Na0.85Ni0.1Fe0.38Mn0.437Sc0.082O2, Na0.85Ni0.1Fe0.38Mn0.437Sn0.082O2, Na0.85Ni0.1Fe0.38Mn0.437Sb0.082O2, Na0.85Ni0.1Fe0.38Mn0.437Zr0.082O2, Na0.85Ni0.1Fe0.38Mn0.437Nb0.082O2, Na0.85Ni0.1Fe0.38Mn0.437Ti0.082O2, Na0.85Ni0.2Fe0.28Mn0.437Mg0.082O2, Na0.85Ni0.1Fe0.38Mn0.437Ru0.082O2, Na0.85Ni0.1Fe0.38Mn0.437Ir0.082O2, Na0.85Ni0.1Fe0.38Mn0.437Al0.04Zn0.04O2, $Na_{0.85}Ni_{0.1}Fe_{0.38}Mn_{0.267}Zn_{0.082}O_2$, $Na_{0.85}Fe_{0.4}Mn_{0.6}O_2$, $Na_{0.92}Ni_{0.15}Fe_{0.34}Mn_{0.45}O_2$, $Na_{0.92}Ni_{0.15}Fe_{0.41}Mn_{0.44}O_2$, $Na_{0.92}Ni_{0.05}Fe_{0.5}Mn_{0.45}O_2$, $Na_{0.92}Fe_{0.38}Mn_{0.6}O_2$, $Na_{0.92}Ni_{0.1}Fe_{0.38}Mn_{0.437}Zn_{0.082}O_2$, $Na_{0.92}Ni_{0.1}Fe_{0.38}Mn_{0.367}Zn_{0.082}O_2$, and Na0.92Ni0.1Fe0.494Mn0.395O2.

**7.** The positive electrode material according to any one of claims 1 to 6, wherein the layered oxide comprises at least one feature of the following (1) to (6):

(1) a crystal structure comprises an O3-phase layered metal oxide, and the O3-phase layered metal oxide accounts for more than 95% of the total weight of the layered oxide;
(2) a $D_v50$ particle size is 3-9 μm; and
(3) single crystals are comprised, wherein the single crystals have a blocky morphology.

**8.** The positive electrode material according to any one of claims 1 to 6, wherein the $D_v50$ particle size of the layered oxide is 4.2-8.5 μm.

**9.** The positive electrode material according to any one of claims 1 to 8, wherein the layered oxide comprises at least one feature of the following (1) to (3):

(1) a powder compacted density under a pressure of 2 tons is higher than 2.7 g/cm$^3$;
(2) a powder compacted density under a pressure of 3 tons is higher than 3.0 g/cm$^3$;
(3) a specific surface area is 0.4-1.5 m$^2$/g.

**10.** The positive electrode material according to any one of claims 1 to 8, wherein the layered oxide comprises at least one feature of the following (1) to (3):

(1) a powder compacted density under a pressure of 2 tons is 2.7-3.0 g/cm$^3$;
(2) a powder compacted density under a pressure of 3 tons is 3.0-3.3 g/cm$^3$; and
(3) a specific surface area is 0.5-0.95 m$^2$/g.

**11.** The positive electrode material according to any one of claims 1 to 10, wherein the layered oxide at 1.5-4.0 V and 0.1C comprises at least one feature of the following (1) to (3):

(1) a charging gram capacity is 130-150 mAh/g;
(2) a discharging gram capacity is 129-140 mAh/g; and
(3) a first-cycle efficiency is higher than 92%.

**12.** The positive electrode material according to any one of claims 1 to 10, wherein the layered oxide at 1.5-4.0 V and 0.1C comprises at least one of the following (1) to (3):

(1) a charging gram capacity is 132-150 mAh/g;
(2) a discharging gram capacity is 130-144 mAh/g; and
(3) a first-cycle efficiency is 92% to 98%.

**13.** A preparation method for a positive electrode material, comprising the following steps:

providing a precursor of $Na_aNi_bFe_cMn_dM_eO_f$; and
performing sintering treatment on the precursor to obtain a layered oxide having a chemical formula of $Na_aNi_bFe_cMn_dM_eO_f$;
wherein $0.8 \leq a \leq 1$, $0.05 \leq b \leq 0.2$, $0.25 \leq c \leq 0.5$, $0.26 \leq d \leq 0.6$, $0 \leq e \leq 0.1$; and M is an active and/or inert doping metal element.

**14.** The preparation method according to claim 13, wherein the doping metal element comprises at least one of Zn, V, Cr, Al, Sc, Sn, Sb, Zr, Nb, Ti, Mg, Cu, Ru, and Ir; and/or
at least one of a, b, c, d, and e is in the following value range:
$0.85 \leq a \leq 1$, $0 \leq b \leq 0.18$, $0.3 \leq c \leq 0.5$, $0.3 \leq d \leq 0.6$, and $0.02 \leq e \leq 0.1$.

**15.** The preparation method according to claim 13 or 14, wherein the sintering treatment comprises at least one condition of the following (1) to (3):

(1) a temperature is 700-980°C;
(2) a time is 3-20 h; and
(3) heating is performed to the temperature of the sintering treatment at a heating rate of 2-15°C/min.

**16.** The preparation method according to claim 13 or 14, wherein the sintering treatment comprises at least one condition of the following (1) to (2):

(1) a temperature is 750-950°C; and
(2) a time is 5-12 h.

**17.** The preparation method according to any one of claims 13 to 16, wherein the precursor of $Na_aNi_bFe_cMn_dM_eO_f$ is prepared by using a method comprising the following steps:

performing solid-phase mixing treatment on a sodium source, a nickel source, a manganese source, an iron source, and an M source based on a stoichiometric ratio of the elements contained in $Na_aNi_bFe_cMn_dM_eO_f$, to obtain the precursor;
and/or
the precursor of $Na_aNi_bFe_cMn_dM_eO_f$ is prepared by using a method comprising the following steps:

preparing, based on the stoichiometric ratio of the elements in $Na_aNi_bFe_cMn_dM_eO_f$, a mixed solution from a soluble nickel source, a soluble manganese source, a soluble iron source, and a soluble doping element

source represented by M, and adding at least one of a precipitant and a complexing agent for co-precipitation treatment to obtain a precipitate mixture; and
performing mixing treatment on the precipitate mixture with a sodium source to obtain the precursor.

**18.** A positive electrode, comprising a current collector and a positive electrode active material layer disposed on a surface of the current collector, wherein the positive electrode active material layer comprises the positive electrode material according to any one of claims 1 to 12 or the positive electrode material prepared by using the preparation method according to any one of claims 13 to 17.

**19.** The positive electrode according to claim 18, wherein content of the positive electrode active material layer on one side of the current collector is 250-330 mg/1540.25 $mm^2$; and/or
an electrode plate compacted density of the positive electrode is 2.6-3.2 $g/cm^3$.

**20.** The positive electrode according to claim 18, wherein content of the positive electrode active material layer on one side of the current collector is 280-320 mg/1540.25 $mm^2$; and/or
an electrode plate compacted density of the positive electrode is 2.8-3.0 $g/cm^3$.

**21.** The positive electrode according to any one of claims 18 to 20, wherein a porosity of the positive electrode active material layer is 35% to 65%; and/or
the positive electrode is an electrode plate, and a sheet resistance of the electrode plate is 0.5-5 $m\Omega$.

**22.** The positive electrode according to any one of claims 18 to 20, wherein a porosity of the positive electrode active material layer is 40% to 58%; and/or
the positive electrode is an electrode plate, and a sheet resistance of the electrode plate is 0.5-3 $m\Omega$.

**23.** The positive electrode according to any one of claims 18 to 22, wherein the positive electrode is an electrode plate, and a ratio of a thickness from one surface of the electrode plate to the opposite other surface to a thickness of the current collector is 7-16:1.

**24.** The positive electrode according to any one of claims 18 to 22, wherein the positive electrode is an electrode plate, and a ratio of a thickness from one surface of the electrode plate to the opposite other surface to a thickness of the current collector is 8-15:1.

**25.** The positive electrode according to any one of claims 18 to 24, wherein a conductive agent contained in the positive electrode active material layer comprises a linear conductive agent.

**26.** The positive electrode according to claim 25, wherein a mass content of the linear conductive agent in the positive electrode active material layer is 0.1% to 2.5%; and/or

an aspect ratio of the linear conductive agent is 40-3000:1; and/or
a length of the linear conductive agent is 0.5-5 $\mu m$; and/or
a diameter of the linear conductive agent is 2-10 nm; and/or
the linear conductive agent comprises at least one of carbon nanotubes, carbon fibers, and conductive oxide nanowires.

**27.** The positive electrode according to claim 25 or 26, wherein a mass content of the linear conductive agent in the positive electrode active material layer is 0.2% to 0.8%; and/or

an aspect ratio of the linear conductive agent is 50-2500:1; and/or
a length of the linear conductive agent is 0.5-2 $\mu m$; and/or
a diameter of the linear conductive agent is 3-7 nm.

**28.** A sodium battery, comprising the positive electrode according to any one of claims 18 to 27.

**29.** The sodium battery according to claim 28, wherein the sodium battery comprises a sodium battery cell, and an operating voltage of the sodium battery cell is 1.5-4.0 V.

**30.** An electric apparatus, comprising the sodium battery according to claim 28 or 29.

10 μm
EHT = 10.00 kV
WD = 4.3 mm
Signal A = InLens
Mag = 1.00 K X
Date :18 Aug 2022
Time :4:52:43
ZEISS

FIG. 1

10
12
11

FIG. 2

10
12
11
12

FIG. 3

20

FIG. 4

23
20
22
22
21

FIG. 5

30
20
20
20

FIG. 6

40

FIG. 7

41
40
30
30
30
30
30
30
42

FIG. 8

FIG. 9

**INTERNATIONAL SEARCH REPORT**

International application No.
**PCT/CN2024/096843**

**A. CLASSIFICATION OF SUBJECT MATTER**

H01M4/36(2006.01)i；H01M4/485(2010.01)i；H01M4/505(2010.01)i；H01M4/525(2010.01)i

According to International Patent Classification (IPC) or to both national classification and IPC

**B. FIELDS SEARCHED**

Minimum documentation searched (classification system followed by classification symbols)

IPC:H01M4/-

Documentation searched other than minimum documentation to the extent that such documents are included in the fields searched

Electronic data base consulted during the international search (name of data base and, where practicable, search terms used)

CNTXT, CNKI, ENTXTC, ENTXT, VEN, ISI_Web of Science: 层, 掺杂, 单晶, 粒径, 密度, 前驱体, 容量, 烧结, 正极, 钠电池, 电池, Fe, Mn, Na, Ni, sodium ion battery, positive electrode, precursor, calcin?

**C. DOCUMENTS CONSIDERED TO BE RELEVANT**

| Category* | Citation of document, with indication, where appropriate, of the relevant passages | Relevant to claim No. |
|---|---|---|
| X | CN 116314640 A (JINGHE XINCHENG SHAANXI COAL TECHNOLOGY RESEARCH INSTITUTE NEW ENERGY MATERIAL CO., LTD.) 23 June 2023 (2023-06-23) description, paragraphs 0007-0014 and 0018-0022, and paragraph 0081, embodiment 1, and figure 1 | 1-30 |
| A | CN 116605918 A (BEIHANG UNIVERSITY) 18 August 2023 (2023-08-18) entire document | 1-30 |
| A | CN 115986106 A (GUANGDONG KAIJIN NEW ENERGY TECHNOLOGY CO., LTD.) 18 April 2023 (2023-04-18) entire document | 1-30 |
| A | CN 116936795 A (SUNWODA ENERGY TECHNOLOGY CO., LTD.) 24 October 2023 (2023-10-24) entire document | 1-30 |
| A | CN 112670497 A (CONTEMPORARY AMPEREX TECHNOLOGY CO., LTD.) 16 April 2021 (2021-04-16) entire document | 1-30 |

☑ Further documents are listed in the continuation of Box C.     ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **29 July 2024** | **02 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**

International application No.
**PCT/CN2024/096843**

**C. DOCUMENTS CONSIDERED TO BE RELEVANT**

| Category* | Citation of document, with indication, where appropriate, of the relevant passages | Relevant to claim No. |
|---|---|---|
| A | WO 2023164986 A1 (JIANGSU XIANGYING NEW ENERGY TECHNOLOGY CO., LTD.) 07 September 2023 (2023-09-07)<br>entire document | 1-30 |

Form PCT/ISA/210 (second sheet) (July 2022)

**INTERNATIONAL SEARCH REPORT**
**Information on patent family members**

International application No.
**PCT/CN2024/096843**

| Patent document cited in search report | Publication date (day/month/year) | Patent family member(s) | Publication date (day/month/year) |
|---|---|---|---|
| CN 116314640 A | 23 June 2023 | None | |
| CN 116605918 A | 18 August 2023 | None | |
| CN 115986106 A | 18 April 2023 | None | |
| CN 116936795 A | 24 October 2023 | None | |
| CN 112670497 A | 16 April 2021 | None | |
| WO 2023164986 A1 | 07 September 2023 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202311450733
- GB 165941996 T
- GB 16418 T
- GB 190772016 T
- GB 195872017 T
- GB 245332019 T
- GB 398642021 T
- GB 421612022 T
- GB 245862009 T
- GB 308352014 T